# EUROPÄISCHE PATENTANMELDUNG

(11) **EP 1 793 154 A2**
(43) Veröffentlichungstag der Anmeldung: **06.06.2007**
(21) Anmeldenummer: 07005233.7
(22) Anmeldetag: 10.08.2001
(51) Int. Cl.: F16L 37/23, F16L 37/22, F16L 37/42

(54) **Buchsenteil für eine pneumatische Entlüftungskupplung**

(30) Priorität: 22.08.2000 DE 10040979
(62) Teilanmeldung aus: 01119315.8
(71) Anmelder: Rectus-Apparatebau, 71735 Eberdingen-Nußdorf (DE)
(72) Erfinder: Seifert, Jürgen, 71665 Ensingen (DE)
(74) Vertreter: Rüger, Barthelt & Abel Patentanwälte

(57) **Zusammenfassung**

Eine Entlüftungskupplung (1) weist einen Grundkörper (2) auf in dem zwei Schrägschlitze (36) enthalten sind, die einen Kanal (18) im Grundkörper anschneiden. Die Schrägschlitze (36) dienen der Aufnahme von zylindrischen Verriegelungsstiften die endseitig über den Grundkörper (2) überstehen. Symmetrisch zwischen den Schrägschlitzen (36) verteilt sind zwei Langlöcher (38) in denen sich Haltekugeln befinden. Die Langlöcher (38) führen ausgehend von dem Mündungsbereich der Schrägschlitze (36) im Kanal (18) zum vorderen Ende des Grundkörpers (2).

Die Verriegelungsstifte werden mit Hilfe eines Druckrings (8) und einer Feder die sich an einem hinteren Widerlager des Grundkörpers (2) abstützt in die nach vorne geschobenen Stellung gedrückt, in der sie tangential durch das Lichtraumprofil des Kanals (18) verlaufen.

Die radiale Bewegung der Haltekugeln wird durch vordere und hintere Stützflächen (48,51) gesteuert, die unterschiedlichen Abstand von der Längsachse des Grundkörpers (2) haben. Zwischen den beiden Stützflächen (48,51) erstreckt sich eine Schrägfläche (52) wodurch es möglich ist, einen großen radialen Hub der Haltekugeln beim Übergang von einer Stützfläche (48,51) auf die andere Stützfläche (48,51) zu erreichen. Der große radiale Hub macht zusätzliche Relativbewegungen zwischen den Stützflächen (48,51) und damit eine Bewegung der Betätigungshülse (6) beim Einstecken des Steckers überflüssig.

## Beschreibung

Aus der Praxis ist ein Buchsenteil für eine pneumatische Entlüftungskupplung bekannt. Das Buchsenteil besteht aus einem Grundkörper, dessen vorder Abschnitt von einem Kunststoffformteil gebildet ist und dessen hinterer Abschnitt aus Metall besteht. Im Grundkörper ist ein durchgehender rotationssymmetrischer Kanal enthalten, der der Aufnahme eines Steckers dient. Die Außenumfangsfläche des Grundkörpers ist mit zwei zueinander diametralen, in Längsrichtung verlaufenden geraden Rippen versehen, die gleichzeitig als Drehsicherung für eine darauf verschiebliche Betätigungshülse dienen.

In dem Grundkörper sind im Abstand zum vorderen Ende zwei schrägverlaufende Langlöcher enthalten, die tangential zu dem Kanal verlaufen und diesen schneiden. In diesen beiden schräg verlaufenden Langlöchern sitzen zwei zylindrische Raststifte, die bei eingeführtem Stecker hinter eine Schulter an den Stecker greifen um den Stecker am Buchsenteil festzuhalten.

Zwischen den beiden schrägverlaufenden Langlöchern befinden sich symmetrisch zwei Langlöcher, deren Längsachse parallel zur Längsachse des Kanals liegt und in denen kugelförmige Haltekörper beweglich geführt sind. Die Haltekörper sollen nach dem Öffnen der Kupplung den Stecker zunächst noch festhalten bis der Druck abgebaut ist, damit der Stecker nicht durch den herrschenden Innendruck herausgeschleudert wird. Um dies zu erreichen befinden sich radial außenliegend, bezogen auf die Haltekugeln, jeweils zwei Halte- oder Stützflächen pro Kugel.

Die vordere Stützfläche hat einen geringeren radialen Abstand als die hintere Stützfläche. Der radiale Abstand in der vorderen Stützfläche ist so bemessen, dass die Haltekugel in dem Langloch in einer Position fixiert wird, in der sie in den Kanal hineinragt. Die zweite Stützfläche hat einen größeren radialen Abstand und gestattet ein radial nach außen gerichtetes Zurückweichen der Haltekugel, bis die Kugel hinter die zylindrische Mandelfläche des Kanals zurückweicht. Die beiden Stützflächen gehen mit einem Sprung ineinander über und zwar an einer solchen Stelle, dass die jeweilige Kugel im Zusammenwirken zwischen der Übergangstelle der Stützflächen und der Wand des Langlochs in einer radialen Position gehalten werden, in der sie in das Lichtraumprofil des Kanals ragt.

Die hinteren Stützflächen sind an einem Druckring als Laschen ausgebildet, der gleichzeitig mit den radial überstehenden Enden der Verriegelungsstifte zusammenwirkt. Mittels einer Schraubendruckfeder, die sich andernends über einen Zwischenring an einer Schulter des Grundkörpers abstützt, wird der Druckring gegen die Zylinderstifte gepresst, damit diese in den schrägverlaufenden Langlöchern am vorderen Ende gehalten werden.

Um das Buchsenteil vom Stecker entkuppeln zu können, ist auf dem Grundkörper eine Betätigungshülse axial verschieblich gelagert, die einerseits mit der Zwischenscheibe verrastet ist und andererseits am vorderen Ende ein Füllstück enthält, das ebenfalls in der Betätigungshülse drehfest eingerastet ist. Dieses vordere Füllstück, das im wesentlichen rohrförmige Gestalt hat, enthält die zweiten Halteflächen für die Haltekugeln.

Sowohl das rohrförmige Füllstück als auch der Druckring haben Durchgangsöffnungen die an die Außenkontur des Grundkörpers angepasst sind, um eine Verdrehsicherung zu gewährleisten.

Die Laschen an denen die hinteren Stützflächen ausgebildet sind haben eine Breite, die deutlich kleiner ist, als der Abstand zwischen den Zylinderstiften derjenigen Stellung in der Sie am dichtesten beieinander liegen.

Damit die Haltekugeln auch mit Sicherheit dann einrasten wenn die Zylinderstifte sich der Freigabestellung nähern, liegen sie bei eingeführtem Stecker im hinteren Ende der parallel zum Grundkörper liegenden Langlöcher. Sie befinden sich dann am Übergang zwischen der hinteren und der vorderen Stützfläche.

Beim Einführen des Steckers werden die Zylinderstifte von der am Stecker vorhandenen Rippe nach hinten gedrängt, wodurch sich ihr Abstand in den schräg zueinander verlaufenden Langlöchern vergrößert um die Rippe passieren zu lassen. Gleichzeitig werden die Haltekugel nach außen gedrückt, was aufgrund der Bemessung der Betätigungshülse eine Bewegung der äußeren Betätigungshülse in eine Richtung entgegen der Einführbewegung des Steckers zur Folge hat.

Eine solche entgegen gerichtete Bewegung der Betätigungshülse ist unzweckmäßig, da sie die Handhabung behindert.

Wegen des im allgemeinen recht hohen Innendrucks bedarf es einer verhältnismäßig großen Kraft um beim Kuppeln den Stecker in dem Buchsenteil zu verriegeln, wobei gleichzeitig das in dem Buchsenteil enthaltene Ventil geöffnet wird. Der Benutzer ist also gezwungen das Buchsenteil mit der ganzen Hand und großer Kraft festzuhalten. Durch den festen Griff behindert er zwangsläufig die mitgegriffene Betätigungshülse, die sich zum verrasten des Stecker bewegen muss.

Ausgehend hiervon ist es Aufgabe der Erfindung ein Buchsenteil für eine Entlüftungskupplung zu schaffen, die komfortabler zu bedienen ist und bei der nicht die Gefahr besteht, dass durch ungünstige räumliche Lage und damit ungünstig zeitliches wirksamwerden der Haltekörper das Verrasten in der Entlüftestellung übersprungen wird.

Diese Aufgabe wird erfindungsgemäß durch das Buchsenteil einer Entlüftungskupplung mit den Merkmalen des Anspruches 1 gelöst.

Die Verwendung der Schrägfläche zwischen der vorderen und der hinteren Stützfläche erlaubt es, die Haltekörper, die den Stecker in der Entlüftungsstellung festhalten sollen, in einer Position zu fixieren, in der sie sich auf der gleichen Höhe wie die Zylinderstifte befinden. Da die Schrägfläche etwas in Richtung auf das vordere Ende hin versetzt ist, haben die Haltekörper ausreichend radialen Spielraum, um die Halterippe am Stecker passieren zu lassen, ohne dass eine Bewegung der Hülse erforderlich ist.

Gleichzeitig gewährleistet die Schrägfläche ein sicheres Fangen der Haltekörper und Überleiten auf die radial weiter innenliegende vordere Stützfläche, wenn die Betätigungshülse in die zurückgezogenen Entriegelungsstellung überführt wird und die Zylinderstifte beginnen, die Verriegelungsrippe am Stecker freizugeben.

Bei der neuen Lösung hat deswegen der Konstrukteur auch größere Freiheiten. Er kann wahlweise die vordere und die hintere Stützfläche starr miteinander verbinden und damit jegliches Risiko ausschließen, dass sich der Haltekörper in einem Spalt zwischen den beiden Flächen verklemmen kann. Er kann aber auch bei anderen Lösungen die vordere und die hintere Stützfläche an zueinander beweglichen Teilen vorsehen, wobei die Schrägfläche den Vorzug mit sich bringt einen kürzeren Betätigungshub zum Freigeben aus der Entlüftungsstellung zu ermöglichen.

Schließlich sorgt die Schrägfläche für eine weichere Betätigung beim Entriegeln des Steckers, weil die Haltekörper auch über einen verhältnismäßig großen Radialhub mit konstantem Rampenwinkel und damit mit konstanter Kraft bewegt werden können. Bei der Verwendung von Kugeln in Verbindung mit einem abrupten Übergang von der hinteren zur vorderen Stützfläche, wie dies beim Stand der Technik zu finden ist, ist der maximal mögliche radiale Hub auf deutlich weniger als den Kugelradius beschränkt. Dadurch wird das Halten und Fangen in der Entlüftungsstellung kritisch.

Wie die weiter unten beschriebenen Ausführungsbeispiele zeigen, können bei der neuen Lösung, je nach spezieller Gestaltung, Grundkörper verwendet werden, die zumindest in einem am vorderen Ende beginnenden Abschnitt vollständig rotationssymmetrisch sind. Dadurch kann der Grundkörper als Drehteil hergestellt werden. Dies ist insbesondere bei der Fertigung von metallischen Grundkörpern ein erheblicher Herstellungsvorteil.

Es versteht sich, dass aus Gründen der Symmetrie und damit der besseren Halterung des Steckers sowohl zwei schrägverlaufende Schlitze als auch zwei Langlöcher in dem Grundkörper enthalten sind.

Der Haltekörper zum Halten des Steckers in der Entlüftestellung kann wahlweise von einer Kugel oder einem pilzförmigen Körper gebildet sein. Der pilzförmige Körper hat den Vorteil, geringere Anforderungen an die Toleranzen des Langlochs zu stellen als wie die Kugel. Bei dieser muss die Konizität des Langlochs einerseits einen ausreichenden Hubs ermöglichen und andererseits sicherstellen, dass die Kugel nicht aus dem Langloch in den Kanal fällt.

Je nach Ausführungsform des Buchsenteils kann die Federeinrichtung aus entweder nur einer einzigen Schraubendruckfeder oder zwei zueinander konzentrischen Schraubendruckfedern bestehen, wobei in jedem Falle entweder die einzige oder eine der beiden Schraubendruckfedern den Druckring gegen die Zylinderstifte drückt.

Die Betätigungshülse kann aus Metall oder als Kunststoffspritzteil hergestellt sein.

Nach dem Entriegeln der Kupplung strömt die in der Kupplung enthaltene Druckluft am Stecker vorbei durch die Langlöcher und Schlitze in den Hohlraum zwischen dem Grundkörper und der Betätigungshülse. Damit die Entlüftungsstellung nicht vorzeitig entriegelt wird, darf der Druck, den die entweichende Luft auf die Betätigungshülse ausübt, nicht dazu führen, die Betätigungshülse nach vorne in die Freigabestellung aus der Entlüftungsstellung zu überführen. Diese Gefahr ist gegeben, weil zwangsläufig die Betätigungshülse zum vorderen Ende hin mit einer Schulter oder Bundfläche versehen ist, die flächenmäßig größer ist als die Bundfläche in der entgegengesetzten Richtung. Eine resultierende Kraftkomponente nach vorne bleibt übrig, die von der Federeinrichtung aufgenommen werden muss. Die Leckagen zwischen der Betätigungshülse und dem Grundkörper müssen deswegen pro Zeiteinheit mehr Luft durchlassen als am Stecker vorbei in den Innenraum zwischen dem Grundkörper und der Betätigungshülse eindringen kann, um den Druckaufbau in erträglichen Grenzen zu halten.

Zu diesem Zweck ist vorteilhafterweise der Wiederlagerring mit einer Vielzahl von Entlüftungsdurchlässen versehen, um ein möglichstes ungehindertes Abströmen der Entlüftungsluft zu gewährleisten. Damit das Abströmen nicht durch andere Maßnahmen behindert wird, ist auch der Halte- oder Verschlussring mit entsprechenden Entlüftungskanälen versehen, vorzugsweise Längsnuten in der Bohrung, mit der er auf dem Grundkörper geführt ist.

Wenn die hinteren Stützflächen an dem Druckring oder einem separaten Ring ausgebildet sind, kann die Betätigungshülse ohne Drehsicherung frei drehbar auf dem Grundkörper sein.

Bei einer anderen Ausführungsform werden die hinteren Stützflächen dazu verwendet, die erforderliche Verdrehsicherung zu erreichen, wenn diese Stützflächen mit der Betätigungshülse vereinigt sind. In diesem Falle sitzen die Stützflächen auf Rippen, die zwischen die Stifte ragen und dadurch die entsprechende Drehsicherheit gewährleistet.

Im übrigen sind Weiterbildungen der Erfindung Gegenstand von Unteransprüchen. Dabei werden ausdrücklich auch Kombinationen von Unteransprüchen mit beansprucht, die als solche von keinem der Ausführungsbeispiele wiedergegeben sind.

In der Zeichnung sind Ausführungsbeispiele des Gegenstandes der Erfindung dargestellt, es zeigen:
- Fig. 1: eine Explosionsdarstellung der wesentlichen Teile eines erfindungsgemäßen Buchsenteils, in einer perspektivischen Darstellung,
- Fig. 2: den Buchsenteil nach Fig.1, in einem Querschnitt längs der Linie II nach Fig.3,
- Fig. 3-7: den Buchsenteil nach Fig.1 in einem Längsschnitt, geschnitten längs der Linie 33 nach Figur 2 in Verbindung mit einem Stecker, in unterschiedlichen Betriebsstellungen,
- Fig. 8: eine Explosionsdarstellung eines zweiten Ausführungsbeispiels des erfindungsgemäßen Buchsenteils,
- Fig. 9: den Buchsenteil nach Fig. 8, geschnitten längs der Linie IX-IX nach Fig. 8,
- Fig. 10: den Buchsenteil nach Fig. 8 in einem Längsschnitt, geschnitten längs der Linie X-X nach Fig. 9, in Verbindung mit einem Stecker und in der ungekuppelten Stellung,
- Fig. 11: ein drittes Ausführungsbeispiel des erfindungsgemäßen Buchsenteils in einer perspektivischen Explosionsdarstellung,

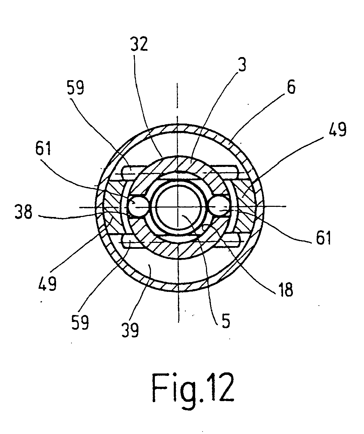

- Fig. 12: den Buchsenteil nach Fig. 11, geschnitten längs der Linie XI-XI nach Fig. 13,
- Fig. 13: den Buchsenteil nach Fig. 11 in einem Längsschnitt, geschnitten längs der Linie XII-XII Fig. 12, in Verbindung mit einem Stecker und in der ungekuppelten Stellung,
- Fig. 14: ein viertes Ausführungsbeispiel des erfindungsgemäßen Buchsenteils in einer perspektivischen Explosionsdarstellung,

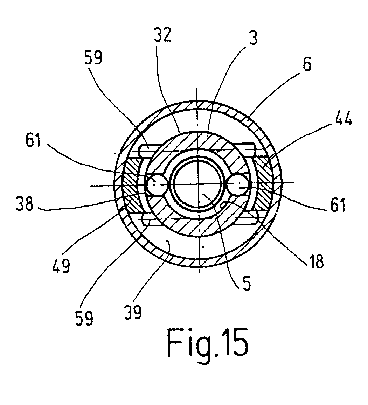

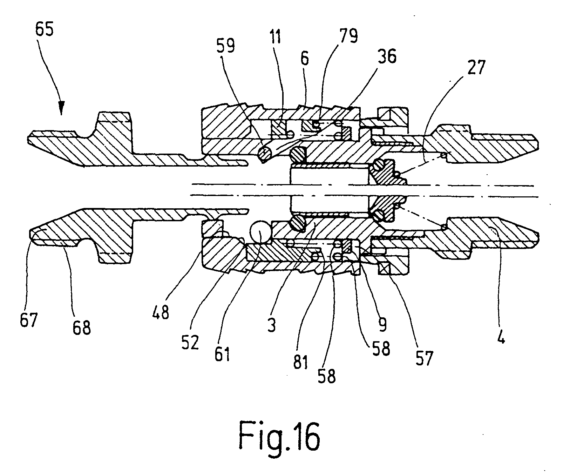

- Fig. 15: den Buchsenteil nach Fig. 14, geschnitten längs der Linie XV-XV nach Fig. 16,
- Fig. 16: den Buchsenteil nach Fig. 14 in einem Längsschnitt geschnitten längs der Linie XVI-XVI nach Fig. 15 in Verbindung mit einem Stecker und in der ungekuppelten Stellung,
- Fig. 17: Das erfindungsgemäße Buchsenteil nach Fig. 1 jedoch mit zusätzlichen Entlüftungskanälen, in einer perspektivischen Explosionsdarstellung,

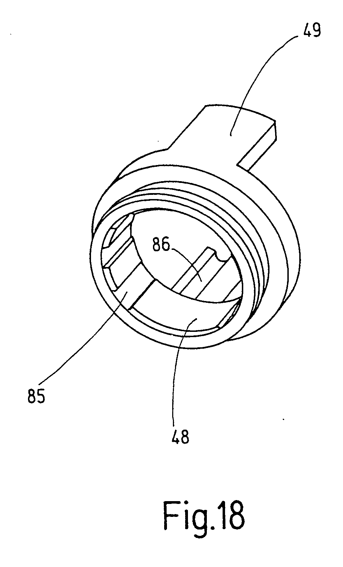

- Fig. 18: den Einsatz mit den Stützflächen für die Betätigungshülse des Buchsenteils nach Fig. 17, in einer perspektivischen Forderansicht,

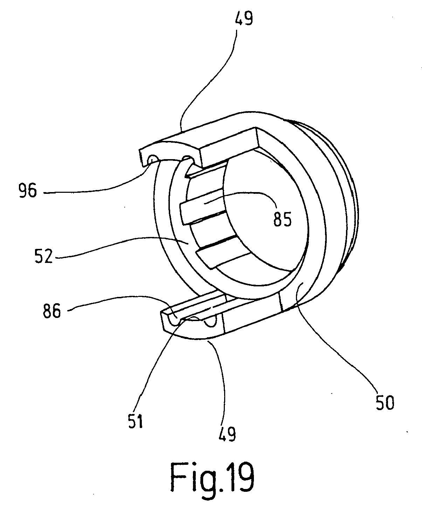

- Fig. 19: den Einsatz nach Fig. 18 in einer perspektivischen Rückansicht,
- Fig. 20: das Ausführungsbeispiel des Kupplungsteils nach Fig. 8 jedoch mit zusätzlichen Entlüftungskanälen, in einer perspektivischen Explosionsdarstellung, und
- Fig. 21: die Betätigungshülse des Buchsenteils nach Fig. 20 in einer vergrößerten perspektivischen Vorderansicht.

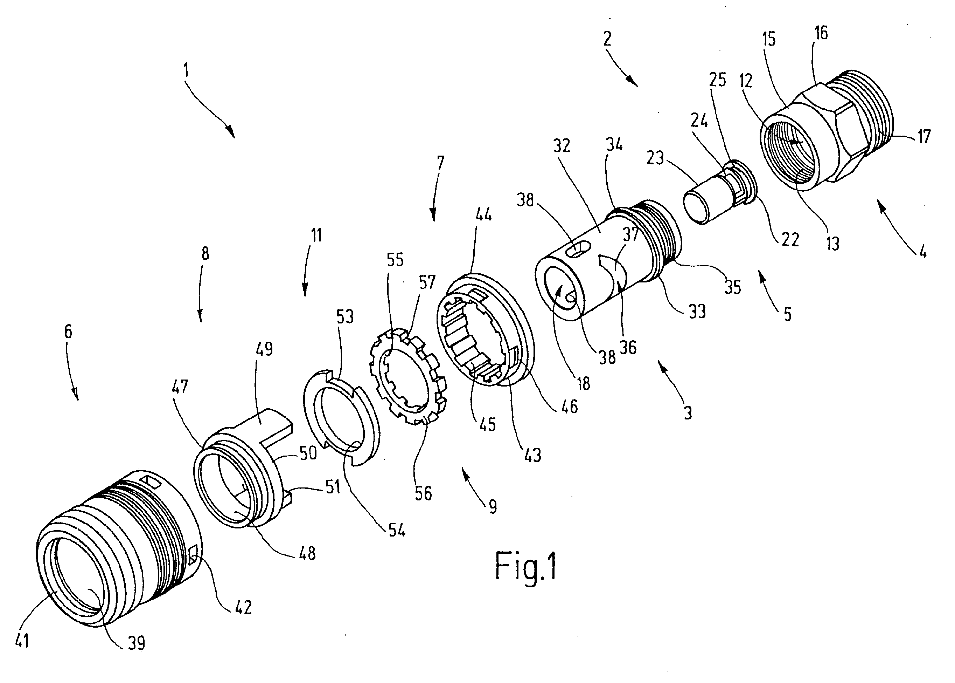

Fig. 1 zeigt in einer perspektivischen Explosionsdarstellung einen Buchsenteil 1 einer Entlüftungskupplung. Zu dem Buchsenteil 1 gehören ein Grundkörper 2, der sich aus einem vorderen Grundkörperabschnitt 3 sowie einem hinteren Grundkörperabschnitt 4 zusammensetzt, ein Ventilverschlussglied 5, eine Betätigungshülse 6 mit deren Abschluss- oder Endring 7, ein Einsatz 8, eine Widerlagerscheibe 9 sowie ein Druckring 11.

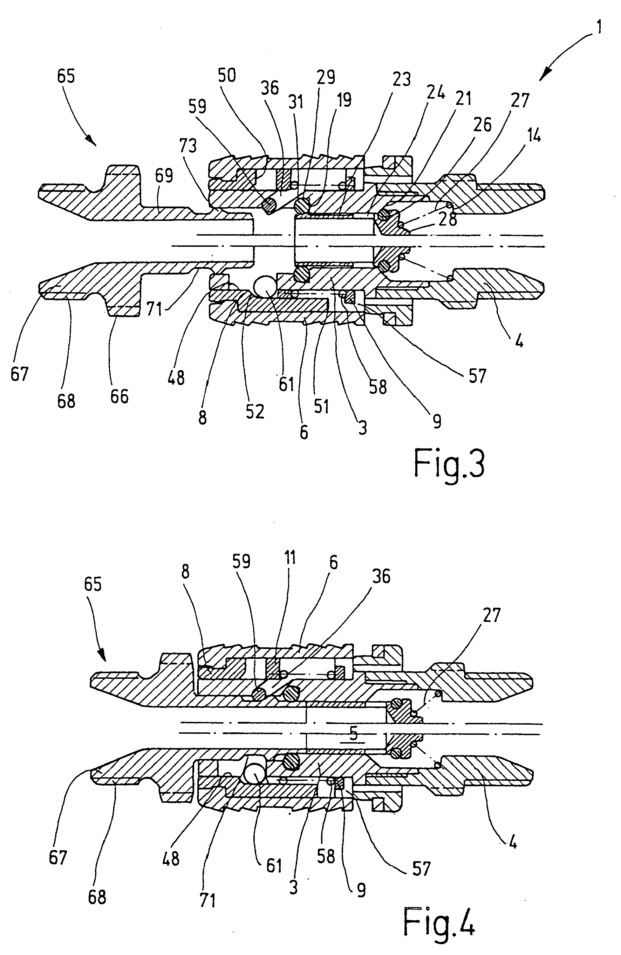

Der hintere Grundkörperabschnitt 4 ist ein im wesentlichen rohrförmiges Gebilde mit einem rotationssymmetrischen Durchlass 12, der an seinem vorderen Ende ein Innengewinde 13 aufweist. Im Inneren verjüngt sich der Durchlass 12 an einer in Fig. 3 erkennbaren Ringschulter 14 zur Rückseite hin.

Auf der Außenseite bildet der hintere Grundkörperabschnitt 4 eine zylindrische, zu dem Durchlass 13 konzentrische Umfangs- und Gleitfläche 15, die am hinteren Ende in einen Sechskantbund 16 übergeht. An den Sechskantbund 16 schließt sich ein Außengewinde 17 an, über das die Entlüftungskupplung 1 mit einem Rohr- oder Schlauchleitungssystem zu verbinden ist, das mit einer Quelle für Druckluft in Verbindung steht.

Der vordere Grundkörperabschnitt 3 ist ebenfalls rohrförmig und ist mit einem rotationssymmetrischen Kanal 18 versehen.

Der Kanal 18 hat bis zu einer wiederum in Figur 3 erkennbaren Schulter 19 einen konstanten Querschnitt. An der Schulter 19 verjüngt sich der Durchmesser des Kanals 18 sprunghaft auf einen kleineren Durchmesser, ab dem der Kanal 18 ebenfalls zylindrisch ist und mit konstantem Durchmesser bis zu einer Kegelfläche 21 durchgeht, die als Ventilsitzfläche dient. Im Anschluss an die Ventilsitzfläche 21 erweitert sich der Kanal 18 erneut auf einen Durchmesser den der Durchlass 12 am vorderen Ende aufweist.

In dem dem hinteren Grundkörperabschnitt 4 zugekehrten Abschnitt des Kanals 18 steckt das Ventilverschlussglied 5, das eine im Wesentlichen becherförmige Gestalt aufweist. Von einem geschlossenen Boden 22 ragt ein zylindrischer Kragen 23 vor, dessen Außendurchmesser so bemessen ist, dass das Ventilverschlussglied 5 mit geringem Spiel in dem hinteren Abschnitt des Kanals 18 verschieblich ist. Am Übergang zum Boden 22 ist der Kragen 23 mit einer Reihe von rechteckigen Durchlässen 24 versehen. Zwischen den Durchlässen 24 und dem vom Betrachter wegzeigenden Ende des Bodens 22 befindet sich eine Ringnut 25 zur Aufnahme eines O-Rings 26, der mit der kegelförmigen Dichtfläche zusammenwirkt.

Um das Ventilverschlussglied 5 in die Schließstellung vorzuspannen, ist eine Kegelfeder 27 vorgesehen, die sich einends auf der Schulter 14 abstützt und anderenends gegen die Rückseite des Bodens 22 wirkt, wo sie mit Hilfe eines Zentrieransatzes 28 radial zentriert ist.

Der Kragen 23 ist auf seiner Außenseite zylindrisch glatt und dichtet ferner mit einem O-Ring 29 ab, der in einer Nut 31 sitzt, die unmittelbar an die Schulterfläche 19 wie in Figur 3 gezeigt anschließt.

Der vordere Grundkörperabschnitt 3 weist in seinem vorderen Abschnitt eine zylindrische Außenumfangsfläche 32 auf, die bis zu einem Bund 33 einen konstanten Querschnitt hat. Der Bund 33 bildet einen nach vorne gerichtete radiale Ringschulter 34.

An den Ringbund 33 schließt sich ein Außengewinde 35 an, mit dem der vordere Grundkörperabschnitt 3 in das Innengewinde 13 des hinteren Grundkörperabschnittes 4 eingeschraubt ist. Im Bereich der Außenumfangsfläche 32 sind zwei schrägverlaufende Schlitze 36 enthalten, die sich bezüglich der Längs- oder Rotationsachse des Grundkörpers 2 diametral gegenüberliegen. Die Schlitze 36 ragen jeweils nur ein kurzes Stück in den Kanal 18.

Die beiden Schlitze 36, von denen wegen der Darstellung lediglich einer in Figur 1 erkennbar ist, sind schräg verlaufende Schlitze. Jeder der beiden Schlitze 36 wird von zwei parallel zueinander verlaufenden Seitenfläche 37 begrenzt. Die durch die Seitenwände 37 definierten Flächen der beiden Schlitze 36 konvergieren in Richtung auf das vordere Ende, wie dies der Querschnitt nach Fig. 3 erkennen läßt.

Symmetrisch zwischen den beiden Schlitzen 36 befinden sich ebenfalls diametral zueinander zwei Langlöcher 38, deren Längsachse parallel zu der Rotationsachse des Grundkörpers 2 liegt. Die Seitenwände der Langlöcher 38 sind konvergierend ausgebildet, damit die lichte Weite auf der Seite des Kanals 18 kleiner ist als auf der Seite der Außenumfangsfläche 32. Die genaue Lage der Langlöcher 38 bezogen auf die Schlitze 36 ergibt sich aus der nachfolgende Funktionsbeschreibung.

Auf dem Grundkörper 2 sitzt verschieblich die rohrförmige Betätigungshülse 6, die einen im Wesentlichen zylindrischen Innenraum 39 aufweist, der sich am vorderen Ende an einem nach innen ragenden Ringbund 41 radial verjüngt. Im hinteren Bereich sind mehrere Rastöffnungen 42 vorgesehen, die sich äquidistant längs dem Umfang verteilen.

Im montierten Zustand steckt in dem hinteren Ende der Betätigungshülse 6 der Abschluss- oder Endring 7, der einen zylindrischen Fortsatz 43 aufweist. Der zylindrische Fortsatz 43 passt mit geringem Spiel in den Innenraum 39 und geht an seinem von der Betätigungshülse 6 abliegenden Ende in einen nach außen ragenden Ringbund 44 über.

Der zylindrische rohrförmige Fortsatz 43 ist an seiner Innenseite mit einer Vielzahl äquidistant verteilter Rippen 45 versehen, die eine Zylinderfläche begrenzen, deren Durchmesser an den Durchmesser der Zylinderfläche 15 angepasst ist. Der Ring 7 ist auf der Zylinderfläche 15 verschieblich.

Um den Ring 7 mit der Betätigungshülse 6 zu verrasten, trägt der Fortsatz 43 an seiner Umfangsfläche eine Reihe von Rastnasen 46, die mit den Rastöffnungen 42 zusammenpassen, wie dies der Querschnitt in Fig. 3 erkennen läßt.

In der Betätigungshülse 6 steckt im montierten Zustand das Einsatzstück 8, das an seinem Vorderende mit einem nach außen weisenden Wulst 47 versehen ist, der mit einem Wulst zu verrasten ist, der von dem Ringbund 41 nach innen ragt, wie dies Fig. 3 im Querschnitt erkennen läßt.

Das Einsatzstück 8 ist ring- oder rohrförmig ausgebildet und weist eine zylindrische Innenfläche 48 auf, die in noch zu beschreibender Weise als vordere Stützfläche dient und deswegen im Folgenden als solche bezeichnet wird.

An seinem rückwärtigen Ende geht das Einsatzstück 8 in zwei diametral einander gegenüberstehende Laschen 49 über, die zur Außenseite hin Zylinderflächen bilden, die mit der Innenumfangsfläche 39 zusammenpassen. Zwischen den Laschen 49 liegen zwei teilringförmige Druckflächen 50. Die Druckflächen 50 definieren eine Ebene, die rechtwinklig zu der Längsachse des Grundkörpers 2 ausgerichtet ist.

Die beiden Laschen 49 sind an der Innenseite ebenfalls von zwei Zylinderflächenabschnitten 51 begrenzt sind, deren Krümmungsachse zu der Längsachse des Grundkörpers 2 koaxial ist. Die Flächen 51 dienen als hintere Stütz- oder Halterflächen, wie weiter unten beschrieben ist.

Der radiale Abstand, den die hinteren Halteflächen 51 von der Rotationsachse des Grundkörpers 2 aufweisen ist größer als der radiale Abstand der vorderen Haltefläche 48. Die hintere und die vordere Halteflächen 48 und 51 gehen, wie in Fig. 3 erkennbar ist, über eine Schrägfläche 52 ineinander über. Die Schrägfläche 52 wird von den Druckflächen 50 leicht angeschnitten.

Der Druckring 11 ist eine Planscheibe mit in der Außenumfangsfläche vorhandenen Durchbrüchen oder Ausnehmungen 53, die an die Querschnittsgestalt der Laschen 49 angepasst sind, damit im montierten Zustand der Druckring 43 gegenüber dem Einsatzstück bzw. Laschen 49 frei verschieblich ist. Der Druckring 11 enthält eine zylindrische Durchgangsbohrung 54, mit der der Druckring 11 mit Spiel auf der Außenumfangsfläche 32 verschieblich ist.

Die Widerlagerscheibe 9 ist ebenfalls eine dünne Scheibe mit einer Bohrung 55, deren Durchmesser dem Durchmesser der Bohrung 54 entspricht und die an Ihrer Außenumfangsseite mit einer Vielzahl von radial wegstehenden Fortsätzen 56 versehen ist, zwischen denen Kanäle 57 entstehen. Die Kanäle 57 setzen sich über die Rückseite der Widerlagerscheibe 9 fort.

Zwischen der Widerlagerscheibe 9 und dem Druckring 11 ist eine Schraubendruckfeder 58 wirksam.

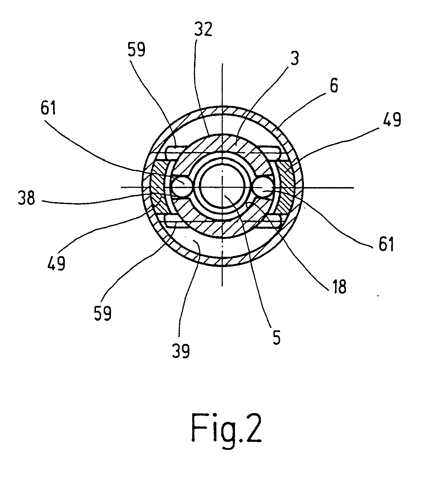

Schließlich gehören zu dem Buchsenteil 1 zwei zylindrische Verriegelungsstifte 59 sowie zwei Haltekugeln 61. Die zylindrischen Verriegelungsstifte 59 liegen in den Schrägschlitzen 36 und sind in der Länge so bemessen, dass sie bei ihrem maximalen radialen zulässigen Hub die Innenumfangsfläche 39 der Betätigungshülse gerade eben berühren. Sie verlaufen im montierten Zustand tangential zu den zylindrischen Innenraum 39 und rechwinklig zu der Längsachse des Buchsenteils 2, wie dies Figur 2 erkennen lässt.

Die Haltekugeln 61 befinden sich in den Langlöchern 38, und zwar in jedem Langloch eine. Ihr Durchmesser ist derart festgelegt, dass sie aufgrund der Konizität der Langlöcher 38 nicht in den Kanal 18 fallen können. Ihr Durchmesser ist außerdem größer als die Wandstärke des vorderen Grundkörperabschnitts 3 im Bereich der Langlöcher 38. Sie stehen somit entweder in den Kanal 18 vor, wenn sie mit der Außenumfangsfläche 32 bündig sind, oder sie stehen über die Außenumfangsfläche 32 über, wenn sie nicht in das Lichtraumprofil des Kanals 18 ragen.

Der Durchmesser der Haltekugeln 61 ist größer als der Durchmesser der Verriegelungsstifte 59. Um die Differenz dieser Durchmesser schneidet die Schrägfläche 52 die Druckfläche 50 an.

Die Montage des Buchsenteils 1 geschieht wie folgt:

Der vordere Grundkörper Abschnitt 3 wird zunächst mit dem O-Ring 31 versehen, sodann wir in den rückwärtigen Teil des Kanals 18 das mit dem O-Ring 26 versehen Ventilverschlussglied 5 mit dem Kragen 23 voraus eingesteckt, bis es die Lage einnimmt, wie sie Fig. 3 zeigt. Anschließend wird die Kegelfeder 27 in den Durchlass 12 des hinteren Grundkörperabschnitts 4 eingelegt und es werden die beiden Grundkörperabschnitte 3 und 4 mittels der Gewinde 13 und 35 zusammengeschraubt.

Die Außenumfangsfläche des Ringbunds 33 geht im montierten Zustand glatt in die Außenumfangsfläche 15 über.

Wenn der Grundkörper 2 in dieser Weise vormontiert ist, wird von dessen vorderen Ende her der Endring 7 aufgeschoben, dessen rohrförmiger Abschnitt 43 zum Vorderende zeigt. Anschließend wird die Widerlagerscheibe 9 aufgeschoben und die Druckfeder 58 aufgesteckt, der Druckring 11 aufgesetzt und unter zusammendrücken der Druckfeder 58 soweit aufgeschoben, bis die zylindrischen Verriegelungsstifte 59 in die Schrägschlitze 36 eingesetzt werden können.

Nach der Montage der Verriegelungsstifte 59 haben diese eine Lage, wie dies der Querschnitt nach Figur 2 erkennen läßt, d.h. sie liegen parallel zueinander. Mit ihrem mittleren Bereich ragen sie in das Lichtraumprofil des Kanals 18 vor.

Die Schrägschlitze 36 münden zwischen dem vorderen Ende des Grundkörpers 2 und der Ringnut 29 für den O-Ring 31, was die Figuren erkennen lassen.

Die Druckfeder 58, die sich einends an dem Widerlagerring 9 abstützt, drückt den Druckring 11 mit seiner vorderen planen Stirnseite gegen die radial nach außen überstehenden Abschnitte der beiden Verriegelungsstifte 59. Die Verriegelungsstifte 59 liegen am Grund des jeweils zugehörigen Schrägschlitzes 36 an und befinden sich mit ihrer Achse in einer gemeinsamen Ebene, die rechtwinklig zu der Längsachse des Grundkörpers 2 liegt.

In die Betätigungshülse 6 wird von der Rückseite her das Einsatzstück 8 eingesteckt, bis es mit der Bundfläche 47 hinter dem Wulst des Ringbunds 41 verrastet. Die verrastete Stellung ist in Figur 3 zu erkennen. Wenn die Betätigungshülse 6 in dieser Weise vorbereitet ist, kann sie von dem vorderen Ende her auf den Grundkörper 2 aufgesteckt werden. Dazu wurde zunächst der Druckring 11 in Umfangsrichtung gedreht bis die beiden Ausnehmungen 53 zwischen den Enden der beiden Verriegelungsstifte 59 zu liegen kommen. Sodann können die Haltekugeln 61 in die Langlöcher 38 eingesetzt werden und dort beispielsweise mittels eines Magneten gegen herausfallen aus den Langlöchern 38 vorübergehend gesichert werden.

Die Betätigungshülse 6 kann nun von der Vorderseite her auf den vormontierten Grundkörper 2 aufgeschoben werden. Beim Aufschieben gleiten die Laschen 49 zwischen den radial überstehenden Enden der Verriegelungsstifte 59 hindurch und passieren auch die Ausnehmungen 53. Als Abschluss der Montage wird von der Rückseite her der Verschluss- oder Endring 7 in die Betätigungshülse 6 eingedrückt, wobei seine Rastnase 46 in den Ausnehmungen 42 verrasten.

Im montierten Zustand ist das vordere Ende der Betätigungshülse 6 mit dem vorderen Ende des Grundkörpers 2 bündig. Der Abschlussring 7 liegt mit seinem vorderen Stirnende an der Rückseite der Widerlagerscheibe 9 an, die gegen die Ringschulter 34 gedrückt wird. Gleichzeitig drückt die Feder 58 den Druckring 11 gegen die radial überstehenden Enden der Zylinderstifte 59, die ihrerseits in einem axialen Spalt liegen, der von der Vorderseite des Druckrings 11 und den Druckflächen 50 des Einsatzstücks 8 begrenzt ist.

Im montierten Zustand befindet sich in der Ruhestellung der Betätigungshülse 6 die Schrägfläche 52 für die jeweilige Haltekugel 61 im Abstand zum hinteren Ende des jeweiligen Endes des Langlochs 38.

Wenn die Haltekugeln 61 am hinteren Ende des jeweils zugehörigen Langloches 38 anliegen befinden sie sich bezogen auf die Längsachse des Grundkörpers 2 auf einer Höhe, die der Höhe der Verriegelungsstifte 59 entspricht, wenn diese am Grund des jeweils zugehörigen Schrägschlitzes 37 anliegen.

Die Ruhe- oder Nullstellung der Betätigungshülse 6 liegt vor, wenn die Vorderseite des Abschlussrings 7 ohne Kraft gegen die Rückseite des Widerlagerrings 9 anliegt, während die Druckflächen 50 spannungsfrei an den Enden der Verriegelungsstifte 59 anliegen.

Ausgehend von dieser Null- oder Ruhestellung kann die Betätigungshülse 6 nach vorne geschoben werden. Hierbei nimmt der Abschlussring 7 die Widerlagerscheibe 9 mit nach vorne und verschiebt sie gegen die Wirkung der Druckfeder 58.

Aus der Ruhe- oder Nullstellung kann die Betätigungshülse 6 auch nach rückwärts verschoben werden. Bei dieser nach rückwärts gerichteten Bewegung drücken die Druckflächen 50 beidseits der Laschen 49 gegen die nach außen überstehenden Enden der Verriegelungsstifte 59 und verschieben diese in Richtung auf den hinteren Grundkörperabschnitt 4. Wegen der schrägen Ausrichtung der Schrägschlitze 36 bewegen sich dabei die Verriegelungsstifte 59 zwangsläufig auch radial nach außen und verschwinden aus dem Lichtraumprofil des Kanals 18.

Da die Verriegelungsstifte 59 andererseits an dem Druckring 11 anliegen, und zwar in jeder Betriebsstellung, wird mit dem Zurückdrücken der Verriegelungsstifte 59 auch der Druckring 11 gegen die Wirkung der Druckfeder 58 zu der Schulter 34 hin verschoben.

Im Verlauf dieser Schiebebewegung laufen die Haltekugeln 61 auf die beiden diametral einander gegenüberliegenden Schrägflächen 52 auf und gelangen auf die vordere Stützfläche 48, von der sie so gehalten werden, dass sie in das Lichtraumprofils des Kanals 18 hervorragen.

Die Funktion wird nachstehend anhand der Figuren 3-7 erläutert. Bei der Betrachtung der Figuren ist zu berücksichtigen, dass in der oberen Hälfte jeder Figur der Buchsenteil 1 in einer Richtung senkrecht zu dem betreffenden Verriegelungsstift 59 geschnitten ist, während im unteren Teil jeder Figur der Schnitt durch eines der Langlöcher 38 führt.

Die Schnittflächen im oberen und im unteren Teil jeder Figur stehen also an sich im Winkel von 90° zueinander.

Fig. 3 zeigt die Ruhestellung vor dem Einführen eines Steckers 65. Der Stecker 65 ist im wesentlichen rohrförmig und weist, bezogen auf seine Länge, in der Mitte einen Sechskantbund 66 auf, der zur Rückseite in ein Anschlussteil 67 mit Außengewinde 68 übergeht und der zum vorderen Ende einen zylinderförmigen rohrförmigen Ansatz 69 trägt. Der Ansatz 69 ist mit einer umlaufenden im Querschnitt trapezförmigen Ringnut 71 versehen. An seinem vorderen Ende bei 72 verjüngt er sich auf einen Durchmesser entsprechend dem Durchmesser des verjüngten Teils des Kanals 18. Auf diese Weise entsteht im Abstand zum vorderen Ende des Steckers 65 eine umlaufende Rippe 73, deren Außendurchmesser etwas kleiner ist als der im Durchmesser weitere Teil des Kanals 18.

Die Schrägschlitze 36 sind derart gestaltet, dass die Verriegelungsstifte 59 zueinander parallel verlaufen und einen minimalen Abstand voneinander haben, der etwas größer ist als der Durchmesser des Abschnitts 72, jedoch kleiner als der Außendurchmesser der Rippe 73.

Wenn der Stecker 65 gemäß Fig. 3 eingeführt wird, kommt die Rippe 73 mit den gegebenenfalls im vorderen Abschnitt der jeweiligen Langlöcher 38 liegenden Haltekugeln 61 in Berührung. Im vorderen Bereich der Langlöcher 38 werden die Haltekugeln 61 von den Stützflächen 48 in den Kanal 18 vorragend gehalten, wodurch die genannte Berührung zustande kommen kann. Beim weiteren Einführen schiebt die Rippe 73 die Kugeln 61 vor sich her, bis sie nach passieren der Schrägfläche 52 radial nach außen ausweichen können, wenn sie auf die weiter radial nach außen liegenden Stützflächen 51 gelangen. Die Rippe 73 kann somit frei den Wirkbereich der Haltekugeln 61 passieren und trifft auf die in das Lichtraumprofil des Kanals 18 ragenden Verriegelungsstifte 59.

Beim weiteren Einschieben drängt der Stecker 65 mit der Rippe 73 die beiden Verriegelungsstifte 59 gegen die Wirkung der Druckfeder 58 zurück, wobei sie wegen der schrägen Anordnung der Schrägschlitze 36 auch radial nach außen zurückweichen, soweit bis der Spalt zwischen den beiden Verriegelungsstiften 59 die Rippe 73 passieren läßt. Sobald die Rippe 73 an den Verriegelungsstiften 59 vorbei geglitten ist, werden die Verriegelungsstifte 59 von dem Druckring 11 zurück in die Ausgangslage gedrückt, weil die Feder 58 ständig bestrebt ist den Druckring 11 zum vorderen Ende des Buchsenteils 1 hin zu verschieben.

In der eingesteckten Lage gemäß Fig. 4 sind die Verriegelungsstifte 59 hinter der Rippe 73 verrastet. Der zylindrische Abschnitt 72 liegt dichtend an dem O-Ring 29 an und außerdem ist das Ventilverschlussglied 5 gegen die Wirkung der Kegelfeder 27 soweit zurückgeschoben, bis die rechteckigen Öffnungen 24 außerhalb der Dichtfläche 21 stehen.

Da die Wandstärke des Buchsenteils 2 im Bereich des vorderen Endes des Kanals 18 kleiner ist als der Durchmesser der Haltekugeln 61, bleiben die Haltekugeln 61 zwangsläufig in einem Raum, der einerseits von der Nut 71 und andererseits von der Schrägfläche 52 sowie der hinteren Stützfläche 51 begrenzt ist. Sie werden dadurch im Bereich des hinteren Ende des jeweiligen Langloches 38 gehalten. In dem besagten Raum liegen die Haltekugeln 61 ohne Vorspannung.

Es besteht eine nach außen hin abgedichtete strömungsmäßige Verbindung zwischen dem hinteren Teil des Durchlasses 12 des Grundkörpers und dem Innenraum des Steckers 65, womit Druckluft ungehindert in den an dem Stecker 65 angeschlossenen Verbraucher einströmen kann.

Der in der Entlüftungskupplung herrschende Druck vermag den Stecker 65 nicht herauszuschleudern, weil die Verriegelungsstifte 59 von der Rippe 73 gegen die betreffende Wand des jeweiligen Schrägschlitzes 36 gedrückt werden. Da diese Wand wie gezeigt schräg verläuft, wird gleichzeitig der Verriegelungsstift 59 radial nach Innen gedrückt.

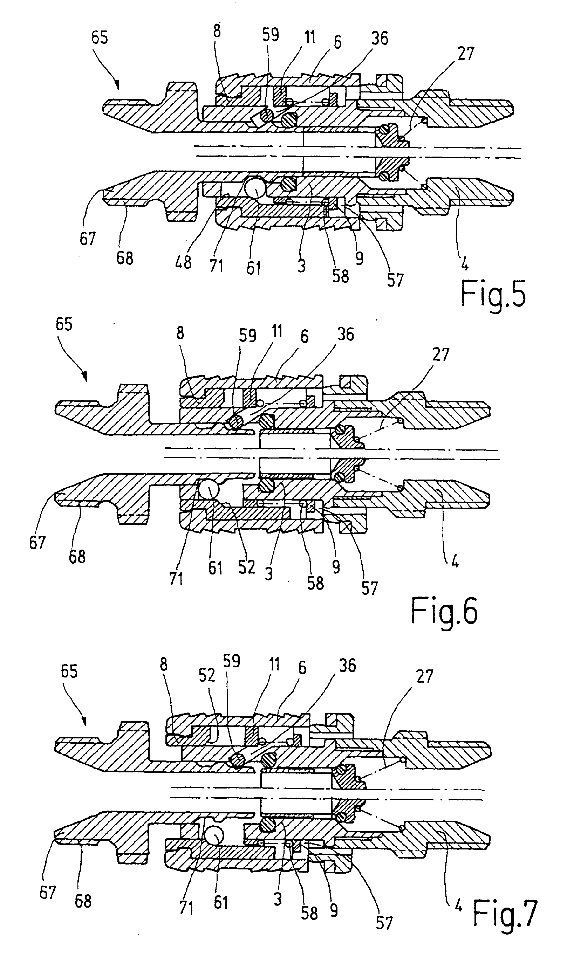

Zum Trennen der Entlüftungskupplung wird die Betätigungshülse 6 in Richtung auf das hintere Ende des Kupplungsteils 2 geschoben, wie dies in Fig. 5 gezeigt ist. Die mit der Betätigungshülse 6 axial starr verbundenen Druckflächen 50 schieben dabei gegen die Wirkung der Druckfeder 58 die Verriegelungsstifte 59 zurück, wobei sie sich gleichzeitig radial nach außen bewegen.

Durch das Zurückschieben der Betätigungshülse 6 verringert sich der Abstand zwischen der Schrägfläche 52 und dem hinteren Ende des betreffenden Langloches 38, wodurch die Haltekugel 61 radial nach Innen gedrängt wird. Die Abmessungen sind so aufeinander abgestimmt, dass, wenn die Verriegelungsstifte 59 anfangen die Rippe 73 freizugeben, die Haltekugeln 61 in den Bereich der vorderen Stützfläche 48 gelangt sind, die auf einem Durchmesser liegen, der etwa dem Außendurchmesser der Umfangsfläche 32 entspricht. Damit ragen die Haltekugeln 61 in die Nut 71, und zwar noch bevor die Verriegelungsstifte 59 die Rippe 73 freigegeben haben.

Sobald die Rippe 73 die Verriegelungsstifte 59 passieren kann, weil sie von der Betätigungshülse 6 weit genug nach hinten und damit radial nach außen gebracht sind, wird der Stecker 65 aufgrund des herrschenden Innendrucks aus dem Buchsenteil 2 herausgeschleudert. Dabei werden die in der Nut 71 sitzenden Haltekugeln 61 von dem Stecker 65 mitgenommen und gestatten eine Axialbewegung des Steckers 65, bis die Haltekugeln 61 am vorderen Ende des jeweils zugehörigen Langloches 38 angekommen sind, wie dies Fig. 6 zeigt. Ein weiteres Herausbewegen aus dem Buchsenteil 2 wird durch die beiden Haltekugeln 61 blockiert. Diese können von der Rippe 73 nicht radial nach außen gedrängt werden. Daran werden sie durch die vordere Stützfläche 48 des Einsatzes 8 gehindert.

Wenn der Benutzer jetzt die Betätigungshülse 6 loslässt wird die Betätigungshülse durch die Druckfeder 58 in die Ruhestellung geschoben, wie sie in den Figuren 3 und 6 gezeigt ist. Dabei wirkt die Druckfeder 58 unmittelbar gegen den Druckring 11, der seine Kraft auf die Verriegelungsstifte 59 überträgt, die ihrerseits an der Druckfläche 50 anliegen und somit die Betätigungshülse 6 soweit vorschieben, bis die Innenseite des Abschlussrings 7 an der Rückseite der Widerlagerscheibe 9 anliegt.

Auch in dieser Stellung halten die Haltekugeln 61 den Stecker 65 im Buchsenteil 2 fest. Die axiale Länge der vorderen Stützfläche 48 ist so bemessen, dass in der Ruhestellung der Betätigungshülse 6 der Übergang zu der Schrägfläche 52 jenseits der Haltekugel 61 liegt. Die Haltekugel 61 wird von der Rippe 73 gegen das vordere Ende des betreffenden Langloches 38 beziehungsweise die vordere Stützfläche 48 gedrückt. Diese Stellung des Steckers 65 kann als Entlüftungsstellung bezeichnet werden.

In der Entlüftungsstellung liegt das Ventilverschlussglied 5 mit seiner O-Ringdichtung 26 auf der Dichtfläche 21 auf und sperrt die von einer Druckluftquelle kommenden Druckluft ab. Gleichzeitig kann sich die Verbindungsleitung zum Verbraucher, der an dem Stecker 65 angeschlossen ist, durch den Spalt zwischen der Stirnseite des Fortsatzes 69 und der Stirnseite des becherförmigen Kragens 23 des Ventilverschlussgliedes 5 entlüften. Das Abströmen der Luft geschieht durch die Kanäle 57 und die zwischen den Rippen 45 entstehenden Kanäle des Verschlussrings 7. Hierdurch wird ein Druckaufbau vermieden, der Bestrebt wäre die Betätigungshülse 6 nach vorne zu schieben.

Der Stecker 65 wird während der Entlüftung, d.h. dem Druckabfall in der Leitung, zum Verbraucher in einer Zwischenstellung mechanisch formschlüssig festgehalten.

Um den Stecker 65 vollständig aus dem Buchsenteil 1 herausziehen zu können, wird die Betätigungshülse 6 gegen die Wirkung der Druckfeder 58 nach vorne geschoben. Die Schrägfläche 52 kommt dadurch in den Bereich der Haltekugel 61 und gestatt dieser, wie Fig. 7 zeigt, ein radial nach außen gerichtetes Zurückweichen hinter die Außenkontur des Kanals 18, womit die Rippe 73 passieren kann, beziehungsweise der Stecker 65 herausgezogen werden kann.

In der vorgeschobenen Stellung der Betätigungshülse 6 liegt dasjenige Ende der Schrägfläche 52, das den kleinsten radialen Abstand von der Längsachse des Grundkörpers 2 hat, etwa bündig zum vorderen Rand des betreffenden Langlochs 38. Die Haltekugel 61 kann damit praktisch unmittelbar auf der Schrägfläche 52 wegrollen.

Wie die Funktionsbeschreibung zeigt, sind bei eingestecktem Stecker 65 die Verriegelungsstifte 59 und die Haltekugeln 61 gleichzeitig in derselben Nut 71 des Steckers 65 festgehalten. Sie sind somit gleichzeitig wirksam, wenn die Verriegelungsstifte 59 anfangen die Rippe 73 freizugeben.

Die fluchtende Ausrichtung der Laschen 49 mit den hinteren Stützflächen 51 wird durch die überstehenden Enden der Verriegelungsstifte 59 gewährleistet, wie dies Fig. 2 erkennen läßt. Die Laschen 59 werden zwischen den Verriegelungsstiften 59 geführt, womit zwangsläufig sichergestellt ist, dass die hinteren Stützflächen 51 auf die betreffenden Langlöcher 38 ausgerichtet bleiben.

Ein Herausdrehen aus dieser Stellung ist praktisch unmöglich, weil dies nur dann möglich wäre, wenn gleichzeitig die Verriegelungsstifte 59 in den Schrägschlitzen 36 verschoben würden.

Jegliche Übertragung von Kräften auf die Verriegelungsstifte 59 infolge einer Drehbewegung an der Betätigungshülse 6 kann vermieden werden, wenn das Einsatzstück 8 in der Betätigungshülse drehbar sitzt.

Bei dem erfindungsgemäßem Buchsenteil 1 ist der Grundkörper 2 frei von Verdrehsicherungen. Er ist abgesehen von den Langlöchern 38 und den Schrägschlitzen 36 ein rotationssymmetrisches Teil und läßt sich somit ohne weiteres aus Metall herstellen. Die Betätigungshülse 6 kann aus Kunststoff gespritzt sein oder ebenfalls ein Metallteil sein. Im letzteren Falle ist es zweckmäßig, wenn die Verbindung zwischen der Betätigungshülse 6 und dem Abschlussring 7, anstelle einer Rastverbindung durch eine Gewindeverbindung hergestellt wird. Im letzteren Falle kann wahlweise der Abschlussring 7 aus Metall bestehen, oder ebenfalls ein Kunststoffformteil sein. Der Einsatz 8, der Druckring 11 und die Widerlagerscheibe 9 können ebenfalls wahlweise aus Metall bestehen oder aus Kunststoff gespritzt sein.

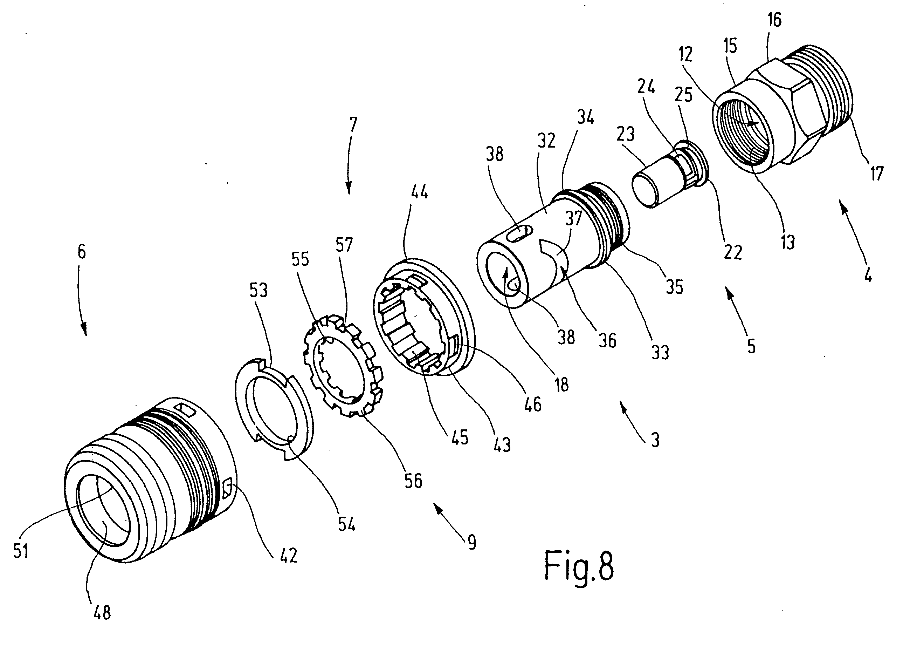

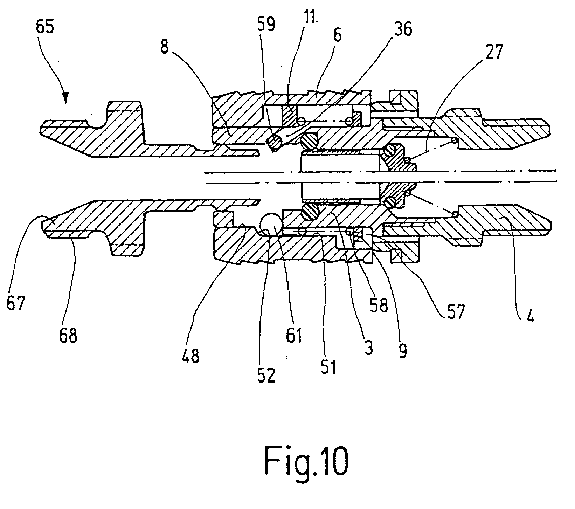

In den Figuren 8 - 10 ist ein weiteres Ausführungsbeispiel des erfindungsgemäßen Buchsenteils 2 dargestellt.

In den Figuren sind für Strukturelemente, die den Strukturelementen des vorbeschriebenen Ausführungsbeispiels gestaltungs- und/oder funktionsmäßig entsprechen, dieselben Bezugszeichen verwendet, ohne hierzu eine ausführliche neue Erläuterung zu geben, die ohnehin nur eine Wiederholung wäre. Die Beschreibung des Aufbaus gilt, abgesehen von den nachfolgend beschriebenen Unterschieden, auch für das Ausführungsbeispiel nach den Figuren 8 - 10.

Der wesentliche Unterschied zu dem eingangs erläuterten Ausführungsbeispiel besteht darin, dass die Stützflächen 48 und 51 sowie die dazwischenliegende Schrägfläche 52 einstückiger Bestandteil der Betätigungshülse 6 sind. Dadurch entfällt das Einsatzstück 8.

Die hinteren Stützflächen 51 sind auf Rippen 75 ausgebildet, die an der Innenumfangsfläche 39 einstückig angeformt sind. Die Rippen 75 erstrecken sich in Längsrichtung der Betätigungshülse 6 entsprechend der Länge der Stützfläche 51. Die vordere Stützfläche 48 wird durch die betreffende Bohrungswand der Betätigungshülse 6 gebildet.

Auch die Druckflächen 50 sind unmittelbar an der Innenseite des Ringbunds 41 ausgebildet.

Die Montage entspricht, abgesehen von dem nicht erforderlichen Einsetzen des Einsatzstückes 8, der Montage des Buchsenteils nach Fig. 1. Die Funktionsweise beim Einstecken des Steckers 65 und beim Entkuppeln ist wie zuvor anhand der Figuren 3 - 7 erläutert.

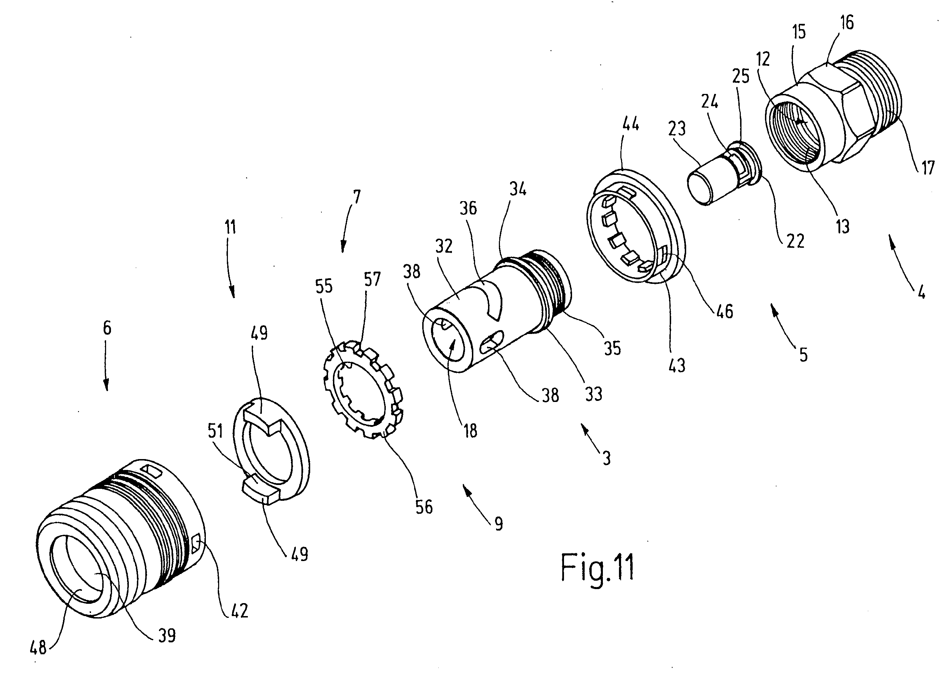

Das Ausführungsbeispiel nach Fig. 11 entspricht hinsichtlich des Aufbaus des Grundkörpers 2, des Verschlussrings 7, der Widerlagerscheibe 9 und des Ventilverschlussglieds 5 dem Ausführungsbeispiels nach Fig. 1 in identischer Weise. Die Betätigungshülse 6 ähnelt in gewisser Weise der Betätigungshülse 6 des Ausführungsbeispiels nach Fig. 8 insofern, als die vordere Stützfläche 48 sowie die Schrägfläche 52 unmittelbar an der Betätigungshülse 6 einstückig ausgeführt sind. Dadurch entfällt im Unterschied zu dem Ausführungsbeispiel nach Fig. 1 das rohrförmige Einsatzstück 8.

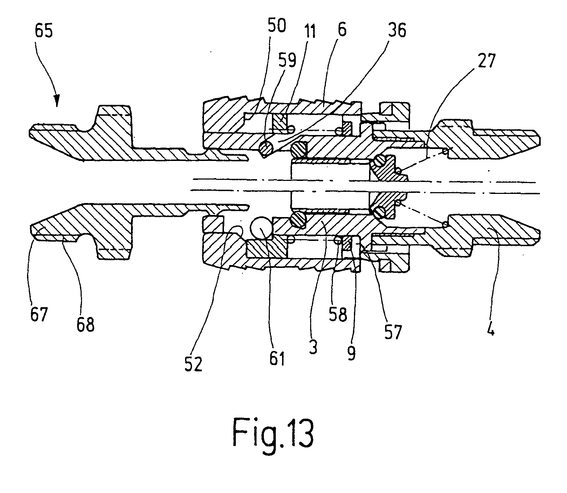

Ein weiterer Unterschied betrifft den Druckring 11, an dem wie Fig. 11 zeigt, die Laschen 49 mit den hinteren Stützflächen 51 unmittelbar angeformt sind. Die Laschen 49 zeigen im montierten Zustand zum vorderen Ende des Grundkörpers und sie liegen mit Ihren freien Stirnenden an der Druckfläche 50 an, wenn sich die Betätigungshülse 6 wie in Fig. 13 gezeigt in der Ruhestellung befindet.

Die Montage des Ausführungsbeispiels nach Fig. 11 unterscheidet sich im Grunde genommen nicht von der Montage des Ausführungsbeispiels nach Fig. 1, mit Ausnahme der speziellen Orientierung der Druckscheibe 11 und dem Wegfall des Montierens des Einsatzstückes 8.

Auch hinsichtlich der Funktion ergeben sich beim Einstecken des Steckers 65, beim Verriegeln und beim Entriegeln bis in die Entlüftestellung keine Unterschied zu dem Ausführungsbeispiel nach Fig. 1. Lediglich beim Freigeben des Steckers 65 besteht ein geringfügiger Unterschied, wie Fig. 13 erkennen läßt.

Zum Entriegeln des Steckers 65 aus der Entlüftestellung wird, wie zuvor beschrieben, die Betätigungshülse 6 nach vorne geschoben. Dieser Bewegung nach vorne kann der Druckring 11 wie bei den vorherigen Ausführungsbeispielen nicht folgen. Er wird an einer weiteren Bewegung nach vorne durch die überstehenden Enden der Verriegelungsstifte 59 gehindert, die die von der Druckfeder 58 ausgeübte Kraft aufnehmen. Hingegen wird die Betätigungshülse 6 nach vorne geschoben. Zwischen der Druckfläche 50 und den Stirnenden der Laschen 49 entsteht wie gezeigt ein geringfügiger Spalt, dessen Weite jedoch kleiner ist als der Durchmesser der Haltekugeln 61. Die Haltekugeln 61 können sich in dem Spalt nicht verklemmen, sind jedoch in der Lage weit genug radial nach außen auszuweichen, um die Rippe 73 passieren zu lassen.

Wie bei allen vorherigen Ausführungsbeispielen liegt dasjenige Ende der Schrägfläche 52, das den kleinsten radialen Abstand von der Längsachse des Grundkörpers 2 hat, in der vorgeschobenen Stellung der Betätigungshülse 6 etwa bündig zum vorderen Rand des betreffenden Langlochs 38.

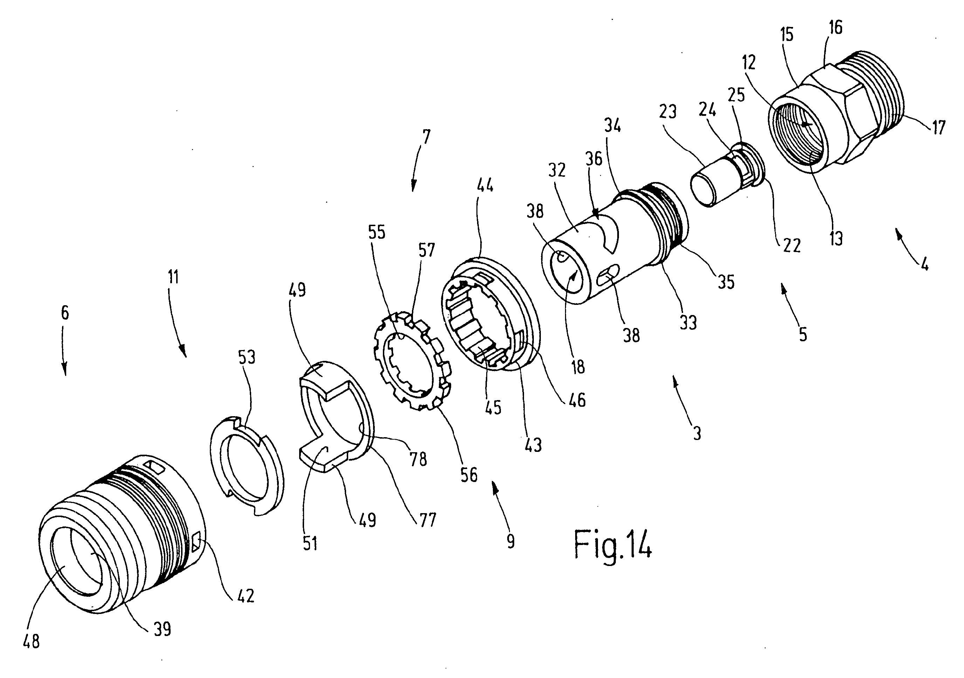

Bei dem Ausführungsbeispiel nach Fig. 14 sind wiederum der Grundkörper 2, das Ventilverschlussglied 5, der Verschlussring 7 und die Widerlagerscheibe 9 genauso gestaltet wie bei dem Ausführungsbeispiel nach Fig. 1. Die Betätigungshülse 6 hat die Gestalt der Betätigungshülse des Ausführungsbeispiels nach Fig. 11. Der Druckring 11 ist wie bei dem Ausführungsbeispiel nach Fig. 1 ausgeführt. Im Unterschied zu den vorherigen Ausführungsbeispielen ist ein zusätzlicher Zwischenring 77 vorhanden, an den die Laschen 49 einstückig angeformt sind.

Im montierten Zustand liegt der Druckring 11 zwischen dem Zwischenring 77 und den Verriegelungsstiften 59. Der Druckring 11 wird wie bei dem Ausführungsbeispiel nach Fig. 1 durch die Druckfeder 58 gegen die über den Grundkörper 2 überstehenden Enden der Verriegelungsstifte 59 angepresst.

Die in dem Druckring 77 enthaltene Bohrung 78 weist einen Durchmesser entsprechend dem Krümmungsradius der hinteren Stützflächen 51 auf, und ist damit größer als jener Kreis der durch den Grund in den Ausne hmungen 53 definiert wird. Der Außendurchmesser hingegen stimmt mit der lichten Weite des Innenraums 39 der Betätigungshülse 6 überein, womit sich der Zwischenring 77 zusammen mit den Laschen 49 grundsätzlich in der Betätigungshülse 6 verschieben ließe. Hierauf kommt es jedoch nur im Zusammenhang mit der Montage an, während des Betriebs und in der Funktion bleibt der Zwischenring 77 bezogen auf die Betätigungshülse 6 in Ruhe, es sei denn die Betätigungshülse 6 wird in Umfangsrichtung gedreht.

Um den Zwischenring 77 mit den Laschen 59 in Anlage an der Druckfläche 50 zu halten ist eine weitere Druckfeder 79 vorgesehen, die sich an der Rückseite des Zwischenrings 77 abstützt und dort beispielsweise mittels eines Zentrierfortsatzes 81 radial zentriert wird. Anderenends stützt sich die Druckfeder 79 an der Widerlagerscheibe 9 in der gleichen Weise ab wie die Druckfeder 58. Die Druckfeder 58 ragt im montierten Zustand durch die Bohrung 78 des Zwischenrings 77 hindurch. Die Montage ist sinngemäß dieselbe wie bei den zuvor erläuterten Ausführungsbeispielen.

Die Funktionsweise beim Einstecken, Entlüften und Entkuppeln des Steckers 65 unterscheidet sich nicht von der Funktionsweise des Ausführungsbeispiels nach Fig. 1.

Die Stützflächen 48 und 51 sowie die Schrägfläche 52 bleiben immer unmittelbar aneinander anliegend. Der einzige Unterschied zum Ausführungsbeispiel nach Fig. 1 besteht darin, dass die Stützfläche 48 sowie die Schrägfläche 52 einstückiger Bestandteil der Betätigungshülse 6 sind, während die hinteren Stützflächen 51 an den Laschen 49 des Zwischenrings 77 ausgebildet sind. Auf die Funktion hat dies jedoch keinen Einfluss.

Die Lage der vorderen und hinteren Stützflächen 48 und 51 sowie der Schrägfläche 52 ist bei allen Ausführungsbeispielen so, wie dies im Zusammenhang im Ausführungsbeispiel nach Fig. 1 beschrieben ist, bzw. es sich aus der Funktionsbeschreibung des Ausführungsbeispiels nach Fig. 1 ergibt.

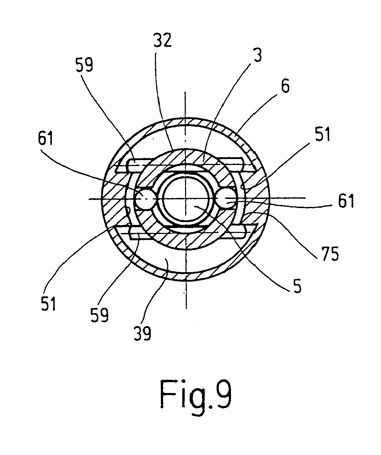

Lediglich mit Ausnahme der Belüftungskupplung nach den Figuren 8 und 9 ist bei allen übrigen Ausführungsbeispielen die Betätigungshülse 6 frei drehbar. Das Drehen der Betätigungshülse 6 überträgt keine Kräfte auf die Verriegelungsstifte 59. Die hinteren Stützflächen 51 werden fluchtend zu den Haltekugeln 61 gehalten, weil sie auf Laschen 49 ausgebildet sind, die zwischen den Enden der Verriegelungsstifte 59, die über die Außenumfangsfläche 32 überstehen in Umfangsrichtung hinreichend Lagerichtig festgehalten werden. Da die Stützflächen 51 Ausschnitte aus Zylinderflächen sind, die zu der Längsachse des Grundkörpers 2 koaxial sind, führen eventuelle geringfügige Verdrehungen in Umfangsrichtung zu keiner geänderten Funktion.

In radialer Richtung werden die Laschen durch die mit geringem Spiel an beiden Enden geführten Betätigungshülse 6 geführt, weil die Außen- oder Rückseite der Laschen 49 mit geringem Spiel in der Betätigungshülse 6 liegt.

Bei dem Ausführungsbeispiel nach Fig. 8 ist die rückwärtige Stützfläche 51 ohnehin integraler Bestandteil der Betätigungshülse 6.

Anstelle der beschriebenen Haltekugeln 61 können auch pilzförmige Haltekörper verwendet werden. Die Langlöcher enthalten dann eine in Umfangsrichtung verlaufende Schulter die radial nach außen zeigt und an der sich der pilzförmige Haltekörper mit seinem Kopf anlegen kann, um ein Hineinfallen in den Kanal 18 zu verhindern.

Ansonsten ist die Funktion dieselbe wie bei den Ausführungsbeispielen mit Haltekugel 61.

Beim Entriegeln in die Entlüftestellung strömt die Druckluft aus dem Stecker 65 in den Buchsenteil 1 ein, und zwar gelangt die Druckluft durch die Schlitze 36 und 38 in den Innenraum der Betätigungshülse 6. Hier wirkt die Druckluft gegen die vordere Ringschulter 50, und ist dabei bestrebt die Betätigungshülse 6 nach vorne mitzunehmen, wodurch die Betätigungshülse 6 in die Freigabestellung kommen würde, in der die Haltekugeln 59 den Stecker 65 freilassen.

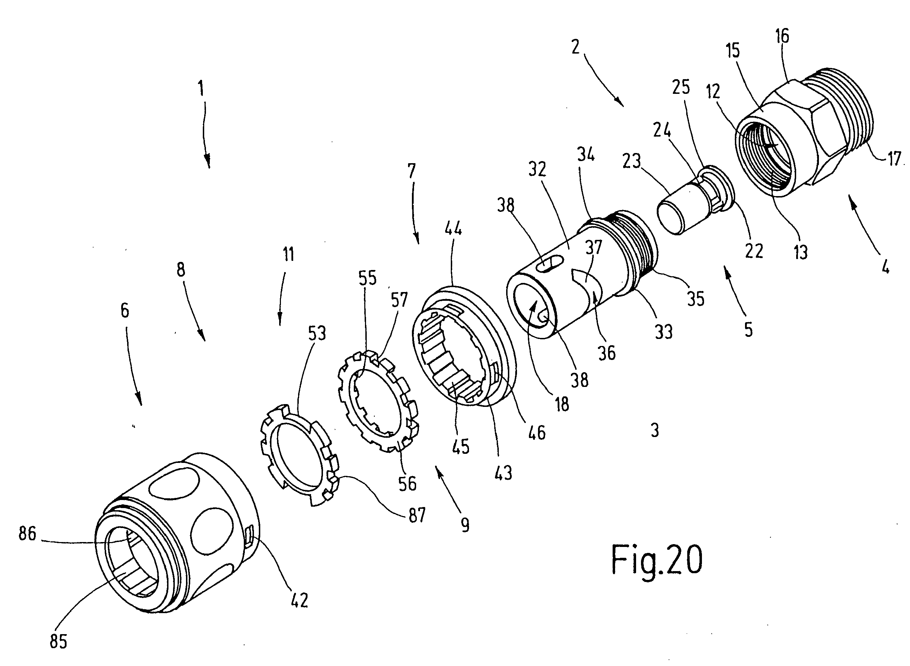

Mit einer gewissen Verzögerung wird die Druckluft auch gegen die Stirnseite des Verschlussrings 7 gedrückt, was einen Teil der nach vorne wirkenden Kraft kompensieren würde. Wegen der zeitlichen Verzögerung und der Drosselung der Luftströmung durch die verschiedenen Scheiben und Ringe bleibt eine nach vorne wirkende erhebliche Nettokraft übrig. Um die nach vorne wirkende Nettokraft zu vermindern sind gemäß Fig. 20 mehrere Entlüftungskanäle in der Innenumfangsfläche 48 des Einsatzes 8 enthalten. Die Entlüftungskanäle haben die Gestalt von Nuten 85 und verlaufen an einer Stelle in Axialrichtung derart, dass sie nicht den als vordere Stützflächen für die Haltekugeln 61 wirksamen Bereich beeinträchtigen.

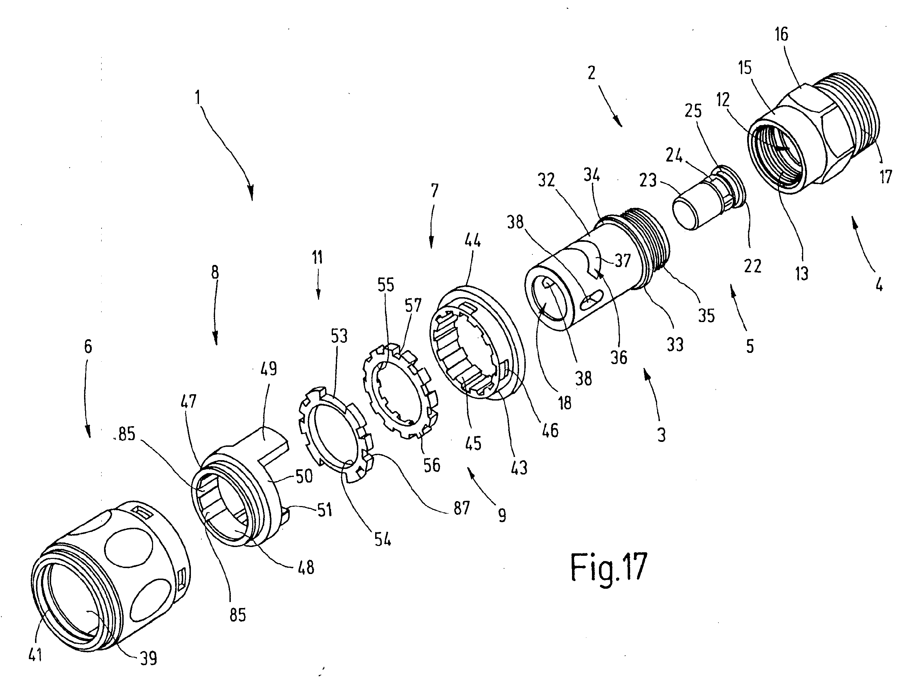

Damit die Druckluft nicht nur möglichst schnell nach vorne abströmen kann, ohne einen zu hohen Druck aufzubauen, sondern auch möglichst schnell und mit hohem Druck die Stirnfläche des hinteren Verschlussrings 7 erreichen kann, sind weitere Nuten 86 in den Laschen 49 enthalten. Die Nuten 86, die gemäß der Figuren ausgeführt sind, liegen ebenfalls in Bereich die außerhalb des Bewegungswegs der Haltekugeln 61 gegenüber den Laschen 49 liegen. Die Nuten 86 liegen somit seitlich parallel neben den eigentlichen hinteren Stützflächen. Ferner ist bei dem Ausführungsbeispiel nach Fig. 17 der Druckring 11 als radial gefiederte Scheibe ausgebildet. Der Druckring enthält zusätzlich zu den beiden Nuten 53 für die Laschen 49 weitere in Axialrichtung verlaufende schmale Nuten oder Durchbrüche 87.

Nach dem Freigeben des Steckers 65 durch Zurückziehen der Betätigungshülse 6, werden die Verriegelungsstifte 59 ebenfalls zurückgezogen und lassen den Stecker 65 frei. Er wird in der Entriegelungsstellung wie oben beschrieben nun durch die Kugeln 61 festgehalten. In der Haltestellung strömt die Druckluft durch die Schlitze 36 und 38 radial nach außen. Sie strömt zunächst einmal in einen Axialraum der nach vorne durch die Schulter 50 bzw. die Schrägfläche 52 und nach hinten durch den Druckring 11 begrenzt ist.

Die ausströmende Luft kann über die Nuten 86 und 87 sowie die Nuten 57 sehr rasch und mit verhältnismäßig geringem Druckabbau den hinteren Verschlussring 7 erreichen, wo sie eine axial nach hinten gerichtete Schubkraft auf den Verschlussring 7 ausübt. Diese Kraft kompensiert zum Teil die nach vorne wirkende Kraft, die von der Schulter 50 ausgeht. Da die Entlüftungskanäle 85 enthalten sind, die nach vorne führen, wird einerseits die effektiv wirksame Schulterfläche vermindert und andererseits der Druckaufbau verringert. Die Differenzkraft, die nach wie vor bestrebt ist, die Betätigungshülse nach vorne zu verschieben, kann auf diese Weise auf Werte vermindert werden, die die Kraft der Feder 58 nicht überwinden kann. Die Betätigungshülse wird durch entströmende Druckluft nicht in die nach vorne geschobene Stellung gedrückt, und der Stecker 65 bleibt zuverlässig in der Entlüftestellung festgehalten.

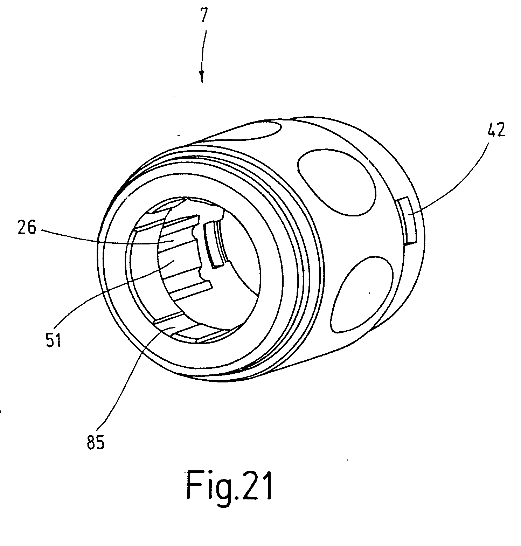

Die Entlüftungskanäle in Gestalt der Nuten 85 und 86 können beispielsweise auch bei dem Ausführungsbeispiel nach Fig. 8 verwendet werden. Die Figuren 20 und 21 zeigen eine solche Modifikation des Ausführungsbeispiels nach Figur 8. Wie zu erkennen ist, sind die Nuten 85 und 86 unmittelbar in der Betätigungshülse 6 ausgebildet. Die Wirkungsweise ist wie zuvor beschrieben.

Eine Entlüftungskupplung weist einen Grundkörper auf in dem zwei Schrägschlitze enthalten sind, die einen Kanal im Grundkörper anschneiden. Die Schrägschlitze dienen der Aufnahme von zylindrischen Verriegelungsstiften die endseitig über den Grundkörper überstehen. Symmetrisch zwischen den Schrägschlitzen verteilt sind zwei Langlöcher in denen sich Haltekugeln befinden. Die Langlöcher führen ausgehend von dem Mündungsbereich der Schrägschlitze im Kanal zum vorderen Ende des Grundkörpers.

Die Verriegelungsstifte werden mit Hilfe eines Druckrings und einer Feder die sich an einem hinteren Widerlager des Grundkörpers abstützt in die nach vorne geschobenen Stellung gedrückt, in der sie tangential durch das Lichtraumprofil des Kanals verlaufen.

Die radiale Bewegung der Haltekugeln wird durch vordere und hintere Stützflächen gesteuert, die unterschiedlichen Abstand von der Längsachse des Grundkörpers haben. Zwischen den beiden Stützflächen erstreckt sich eine Schrägfläche wodurch es möglich ist, einen großen radialen Hub der Haltekugeln beim Übergang von einer Stützfläche auf die andere Stützfläche zu erreichen. Der große radiale Hub macht zusätzliche Relativbewegungen zwischen den Stützflächen und damit eine Bewegung der Betätigungshülse beim Einstecken des Steckers überflüssig.

## Patentansprüche

1. Buchsenteil (1) einer Entlüftungskupplung für Fluidverbindungen,
mit einem einen durchgehenden, geraden und rotationssymmetrischen Kanal (18) enthaltenden Grundkörper (2), der von einer Außenumfangsfläche (32) begrenzt ist und der ein vorderes und ein hinteres Ende bildet, wobei von dem vorderen Ende her ein Stecker (65) in den Kanal (18) einführbar ist,
mit einer ersten lösbaren Verriegelungseinrichtung (36,59), die wenigstens eine ersten Schlitz (36) in dem Grundkörper (2) sowie ein darin sitzendes Verriegelungselement (59) enthält und die dazu dient, einen Stecker (65) in dem Buchsenteil (1) in einer Stellung zu verriegeln, in der die Fluidverbindung besteht und nach außen abgedichtet ist,
mit einer lösbaren Halteeinrichtung (38,61), die wenigstens einen zweiten Schlitz (38) in dem Grundkörper (2) sowie ein darin sitzendes Halteelement (61) enthält und die dazu dient, einen Stecker (65) in dem Buchsenteil (1) in einer Stellung zu halten, in der die Fluidverbindung unterbrochen ist und eine Entlüftung außen besteht, mit einer auf dem Grundkörper (2) angeordneten und auf dem Grundkörper (2) längsverschieblichen Betätigungshülse (6) zum Betätigen der Verriegelungseinrichtung (36,59) und der Halteeinrichtung (38,61), wobei der Innenraum der Betätigungshülse (6) in wenigsten einen ersten (41) und einen zweiten (39) Abschnitt gegliedert ist, von denen der erste (41) dem vorderen Ende benachbart ist, und
mit wenigstens einem Entlüftungskanal (85,86,87), durch den zweiten Abschnitt (39) der Betätigungshülse (6) strömungsmäßig mit der Außenatmosphäre verbunden ist.

2. Buchsenteil nach Anspruch 1, **dadurch gekennzeichnet, dass** der Buchsenteil (1) wenigstens eine dem vorderen Ende benachbarten vorderen Stützfläche (48) für den Haltekörper (61), wenigstens eine von dem vorderen Ende abliegenden hinteren Stützfläche (51) für den Haltekörper (61) und eine Schrägfläche (52) aufweist, die sich zwischen der zugehörigen vorderen und der zugehörigen hinteren Stützfläche (48,51) erstreckt, und dass die vordere Stützfläche (48), die hintere Stützfläche (51) und die Schrägfläche (52) derart gestaltet sind, dass sie mittels der Betätigungshülse (6) relativ zu dem Grundkörper (2) in Längsrichtung desselben veschiebbar sind.

3. Buchsenteil nach Anspruch 1, **dadurch gekennzeichnet, dass** der Entlüftungskanal (85,86) in der Innenfläche der Betätigungshülse (6) als Nut ausgebildet ist.

4. Buchsenteil (1) nach Anspruch 1,
mit einem einen durchgehenden, geraden und rotationssymmetrischen Kanal (18) enthaltenden Grundkörper (2), der von einer Außenumfangsfläche (32) begrenzt ist, auf dessen Außenumfangsfläche (32) eine in axialer Richtung zeigende Schulter (34) ausgebildet ist und der ein vorderes und ein hinteres Ende bildet, wobei von dem vorderen Ende her ein Stecker (65) in den Kanal (18) einführbar ist,
mit wenigstens einem ersten Schlitz (36) in dem Grundkörper (2), dessen Lichtraumprofil tangential den Kanal (18) schneidet und dessen Wände (37) parallel zu einer Ebene sind, die schräg zu der Längsachse des Kanals (18) ausgerichtet ist,
mit wenigstens einem Verriegelungsstift (59), der sich in dem ersten Schlitz (36) befindet und mit seinen beiden Endabschnitten über die Außenumfangsfläche (32) des Grundkörpers (2) übersteht,
mit wenigstens einem Langloch (38), das von der Außenumfangsfläche (32) ausgehend bis zu dem Kanal (18) reicht und dessen Längsachse zu der Längsachse des Kanals (18) parallel ausgerichtet ist,
mit wenigstens einem Haltekörper (61), der in dem Langloch (38) enthalten ist und dessen Abmessungen in radialer Richtung bezogen auf den Grundköper (2) größer ist als die Wandstärke des Grundkörpers (2) im Bereich des Langlochs (38),
mit einem Druckring (11), der auf dem Grundkörper (2) verschieblich sitzt und mit den Enden des wenigstens einen Verriegelungsstifts (59) zusammenwirkt,
mit wenigstens einer Druckfedereinrichtung (58), die zwischen dem Druckring (11) und einem Widerlager (9,34) wirksam ist, um den Druckring (11) in diejenige Richtung vorzuspannen, in der der Verriegelungsstift (59) gegen den Grund des Schlitzes (36) vorgespannt ist,
mit einer auf dem Grundkörper (2) angeordneten und auf dem Grundkörper (2) längsverschieblichen Betätigungshülse (6), deren Innenraum in wenigsten einen ersten (41) und einen zweiten (39) Abschnitt gegliedert ist, von denen der erste (41) dem vorderen Ende benachbart ist, und die in ihrem Inneren eine Schulter (50) enthält, die zum Zusammenwirken mit den Enden des wenigstens einen Verriegelungsstifts (59) eingerichtet ist, wobei die Betätigungshülse (6) in eine erste, eine zweite und eine dritte Stellung zu bringen ist,
mit einem Widerlagerring (9), der in einem Ringspalt zwischen der Betätigungshülse (6) und dem Grundkörper (2) enthalten und gegenüber beiden verschieblich ist sowie das Widerlager (9,34) für die Federeinrichtung (58) bildet,
mit wenigstens einer dem vorderen Ende benachbarten vorderen Stützfläche (48) für den Haltekörper (61),
mit wenigstens einer von dem vorderen Ende abliegenden hinteren Stützfläche (51) für den Haltekörper (61),
mit wenigstens einer Schrägfläche (52), die sich zwischen der zugehörigen vorderen und der zugehörigen hinteren Stützfläche (48,51) erstreckt, und
mit einem in dem Kanal (18) enthaltenen Ventil (5,21), das bei eingeschobenem Stecker (65) von diesem in der geöffneten Stellung gehalten wird,
wobei die Abmessungen derart gestaltet sind,
dass die erste Stützfläche (48) einen radialen Abstand aufweist, derart, dass ein an der ersten Stützfläche (48) anliegender Haltekörper (61) in den Kanal (18) hineinragt,
dass die zweite Stützfläche (51) einen radialen Abstand aufweist, derart, dass ein an der zweiten Stützfläche (51) anliegender Haltekörper (61) nicht in das Lichtraumprofil des Kanals (18) hineinragt,
dass der Haltekörper (61) in derjenigen Lage, in der er in dem Langloch (38) am weitesten von dem vorderen Ende entfernt ist, sich im wesentlichen auf der gleiche Höhe befindet wie der Verriegelungsstift (59), wenn er sich in einer Lage befindet, in der er dem vorderen Ende am nächsten benachbart ist,
dass in der Ruhestellung der Betätigungshülse (6) die zweite Stützfläche (51) dem hinteren Ende des Langlochs (38) gegenüber steht und die Schrägfläche (52) von dem hinteren Ende des Langlochs (38) einen Abstand aufweist, derart, dass der Haltekörper (61) mit geringem Spiel auf der Höhe des Verriegelungsstifts (59) gehalten wird.

5. Buchsenteil nach Anspruch 1, **dadurch gekennzeichnet, dass** die Außenumfangsfläche (32) zumindest in einem an dem vorderen Ende beginnenden Abschnitt im wesentlichen rotationssymmetrisch ist.

6. Buchsenteil nach Anspruch 1, **dadurch gekennzeichnet, dass** der Grundkörper (2) aus einem vorderen und einem hinteren Abschnitt (3,4) besteht, die miteinander formschlüssig verbunden sind.

7. Buchsenteil nach Anspruch 1, **dadurch gekennzeichnet, dass** der Kanal (18) ausgehend von seinem vorderen Ende bis hinter den Schlitz (36) zylindrisch mit durchgehend konstantem Querschnitt ist.

8. Buchsenteil nach Anspruch 1, **dadurch gekennzeichnet, dass** zwei Schlitze (36) enthalten sind, die sich bezüglich der Längsachse des Kanals (18) diametral gegenüber liegen und deren Seitenwände Ebenen definieren, die in Richtung auf das vordere Ende konvergieren.

9. Buchsenteil nach Anspruch 1, **dadurch gekennzeichnet, dass** zwei Langlöcher (38) enthalten sind, die sich bezüglich der Längsachse des Kanals (18) diametral gegenüberliegen.

10. Buchsenteil nach Anspruch 1, **dadurch gekennzeichnet, dass** die Weite des Langlochs (18) gemessen rechtwinklig zu dessen Längsachse an der Außenumfangsfläche (32) des Grundkörpers (2) größer ist als auf der Seite des Kanals (18), derart, dass ein in dem Langloch (38) befindlicher Haltekörper (61) daran gehindert ist, das Langloch (38) in Richtung auf den Kanal (18) zu passieren, wobei die Abmessungen derart gewählt sind, dass der Haltekörper (61) in einer Lage, in der er der Längsachse des Kanals (18) am nächsten benachbart ist, in den Kanal (18) hineinragt.

11. Buchsenteil nach Anspruch 1, **dadurch gekennzeichnet, dass** der Haltekörper (61) von einer Kugel gebildet ist.

12. Buchsenteil nach Anspruch 1, **dadurch gekennzeichnet, dass** der Haltekörper die Gestalt eines Pilzes aufweist und dass das Langloch eine umlaufende Schulter enthält.

13. Buchsenteil nach Anspruch 1, **dadurch gekennzeichnet, dass** die Federeinrichtung (58) von lediglich einer einzigen schraubenförmigen Druckfeder (58) gebildet wird, die mit dem Druckring (11) zusammenwirkt.

14. Buchsenteil nach Anspruch 1, **dadurch gekennzeichnet, dass** die Federeinrichtung (58) zwei zueinander konzentrische schraubenförmige Druckfedern (58,79) aufweist, von denen lediglich die radial innen liegende mit dem Druckring (11) zusammenwirkt.

15. Buchsenteil nach Anspruch 1, **dadurch gekennzeichnet, dass** die Betätigungshülse (6) aus Metal besteht.

16. Buchsenteil nach Anspruch 1, **dadurch gekennzeichnet, dass** die Betätigungshülse (6) ein Kunststoffspritzteil ist.

17. Buchsenteil nach Anspruch 1, **dadurch gekennzeichnet, dass** der erste Abschnitt (41) der Betätigungshülse (6) einen geringeren Durchmesser aufweist als der zweite Abschnitt (39).

18. Buchsenteil nach Anspruch 1, **dadurch gekennzeichnet, dass** der Widerlagerring (9) Entlüftungskanäle (57) enthält.

19. Buchsenteil nach Anspruch 1, **dadurch gekennzeichnet, dass** der Widerlagerring (9) ein Kunststoffformteil ist.

20. Buchsenteil nach Anspruch 1, **dadurch gekennzeichnet, dass** sich der Widerlagerring (9) im Ruhezustand an der Schulter (34) des Grundkörpers (2) abstützt.

21. Buchsenteil nach Anspruch 1, **dadurch gekennzeichnet, dass** der Betätigungshülse (6) ein Verschlussring (7) zugeordnet ist.

22. Buchsenteil nach Anspruch 21, **dadurch gekennzeichnet, dass** der Verschlussring (7) mit der Betätigungshülse (6) formschlüssig verbunden ist.

23. Buchsenteil nach Anspruch 22, **dadurch gekennzeichnet, dass** die formschlüssige Verbindung von einer Rastverbindung (42,46) gebildet ist.

24. Buchsenteil nach Anspruch 22, **dadurch gekennzeichnet, dass** die formschlüssige Verbindung von einem Gewinde gebildet ist.

25. Buchsenteil nach Anspruch 1, **dadurch gekennzeichnet, dass** der Verschlussring (7) sich auf jener Seite des Wiederlagers (9) befindet, die von dem vorderen Ende des Grundkörpers (2) abliegt.

26. Buchsenteil nach Anspruch 1, **dadurch gekennzeichnet, dass** der Verschlussring (7) Entlüftungskanäle enthält.

27. Buchsenteil nach Anspruch 1, **dadurch gekennzeichnet, dass** die vordere Stützfläche (48) an der Betätigungshülse (6) ausgebildet ist.

28. Buchsenteil nach Anspruch 1, **dadurch gekennzeichnet, dass** die vordere Stützfläche (48) ein Ausschnitt aus einer Zylinderfläche ist, die zu der Längsachse des Kanals (18) koaxial ist.

29. Buchsenteil nach Anspruch 1, **dadurch gekennzeichnet, dass** die Betätigungshülse (6) einen im Wesentlichen rohrförmigen Einsatz (8) enthält.

30. Buchsenteil nach Anspruch 1, **dadurch gekennzeichnet, dass** der rohrförmig Einsatz (8) in der Betätigungshülse (6) drehbar ist.

31. Buchsenteil nach Anspruch 1, **dadurch gekennzeichnet, dass** die vordere Stützfläche (48) an der Innenseite des rohrförmigen Einsatzes (8) ausgebildet ist.

32. Buchsenteil nach Anspruch 1, **dadurch gekennzeichnet, dass** die Schrägfläche (52) ein Ausschnitt aus einer Kegelmantelfläche ist, die zu der Längsachse des Kanals (18) koaxial ist.

33. Buchsenteil nach Anspruch 1, **dadurch gekennzeichnet, dass** die Schrägfläche (52) in der Betätigungshülse (6) ausgebildet ist.

34. Buchsenteil nach Anspruch 1, **dadurch gekennzeichnet, dass** die Schrägfläche (52) in dem rohrförmigen Einsatz (8) ausgebildet ist.

35. Buchsenteil nach Anspruch 1, **dadurch gekennzeichnet, dass** die hintere Stützfläche (51) ein Ausschnitt aus einer Zylinderfläche ist, die zu der Längsachse des Kanals (18) koaxial ist.

36. Buchsenteil nach Anspruch 1, **dadurch gekennzeichnet, dass** die Breite der hinteren Stützfläche (51) gemessen in Umfangsrichtung des Grundkörpers (2) etwa dem Abstand der Verriegelungsstifte (59) in der Ruhestellung entspricht und dass die zweite Stützfläche (51) einen radialen Abstand von der Längsachse des Grundkörpers (18) aufweist, der kleiner ist als der radiale Abstand, den ein Ende eines Verriegelungsstifts (59) hat.

37. Buchsenteil nach Anspruch 1, **dadurch gekennzeichnet, dass** die hintere Stützfläche (51) in dem rohrförmigen Einsatz (8) der Betätigungshülse (6) ausgebildet ist.

38. Buchsenteil nach Anspruch 1, **dadurch gekennzeichnet, dass** die hintere Stützfläche (51) auf einer Rippe (75) im Inneren der Betätigungshülse (6) ausgebildet ist, die in Längsrichtung verläuft.

39. Buchsenteil nach Anspruch 1, **dadurch gekennzeichnet, dass** die hintere Stützfläche (51) auf einer axial sich erstreckenden Lasche (49) ausgebildet ist, die mit dem Druckring (11) einstückig ist.

40. Buchsenteil nach Anspruch 1, **dadurch gekennzeichnet, dass** die hintere Stützfläche (51) an einer Lasche (49) ausgebildet ist, die mit einem Ring (77) einstückig ist, der sich auf der von dem vorderen Ende abliegenden Seite des Druckrings (11) befindet,

41. Buchsenteil nach Anspruch 1, **dadurch gekennzeichnet, dass** der Druckring (11) zum Durchtritt der Lasche (49) an seiner Außenseite wenigstens einer Ausnehmung (53) aufweist.

42. Buchsenteil nach Anspruch 1, **dadurch gekennzeichnet, dass** zur Betätigung der Verriegelungsstifte (59) Druckflächen (50) unmittelbar in der Betätigungshülse (6) vorgesehen sind.

43. Buchsenteil nach Anspruch 1, **dadurch gekennzeichnet, dass** zur Betätigung der Verriegelungsstifte (59) Druckflächen (50) vorgesehen sind, die an dem Einsatz (8) ausgebildet sind.

44. Buchsenteil nach Anspruch 1, **dadurch gekennzeichnet, dass** wenigstens ein Entlüftungskanal (85,86) vorgesehen ist, durch den zweiten Abschnitt (39) der Betätigungshülse (6) strömungsmäßig mit der Außenatmosphäre verbunden ist.

45. Buchsenteil nach Anspruch 1, **dadurch gekennzeichnet, dass** der Entlüftungskanal (85,86) in der Innenfläche des vorderen Abschnitts (41) der Betätigungshülse (6) als Nut (85) ausgebildet ist.

46. Buchsenteil nach Anspruch 28 und 45, **dadurch gekennzeichnet, dass** der Entlüftungskanal (85,86) neben der vorderen Stützfläche (48) vorzugsweise als Nut (85) ausgebildet ist.

47. Buchsenteil nach Anspruch 30 und 45, **dadurch gekennzeichnet, dass** der Entlüftungskanal (85,86) in dem rohrförmigen Einsatz (8) als Nut (85) ausgebildet ist.

48. Buchsenteil nach Anspruch 45, **dadurch gekennzeichnet, dass** der Entlüftungskanal (86) sich bis zum hinteren Ende der hinteren Stützfläche (51) fortsetzt.

49. Buchsenteil nach Anspruch 39 und 49, **dadurch gekennzeichnet, dass** der Entlüftungskanal (86) sich als Nut neben der hinteren Stützfläche (51) erstreckt.

50. Buchsenteil nach Anspruch 39 und 49, **dadurch gekennzeichnet, dass** der Entlüftungskanal (86) sich als Nut auf der Rippe (75) erstreckt.

51. Buchsenteil nach Anspruch 40 und 49, **dadurch gekennzeichnet, dass** der Entlüftungskanal (86) sich als Nut auf der Lasche (49) erstreckt.
